# EUROPEAN PATENT SPECIFICATION

(11) **EP 1 732 248 B1**
(45) Date of publication and mention of the grant of the patent: **19.08.2009**
(21) Application number: 05721473.6
(22) Date of filing: 25.03.2005
(51) Int. Cl.: H04B 10/10, H04L 12/44

(54) **INFRARED COMMUNICATION UNIT FOR RELAYING BETWEEN A MAIN UNIT AND A TERMINAL UNIT**
INFRAROT-KOMMUNIKATIONSEINHEIT ZUR ÜBERTRAGUNGSWEITERLEITUNG ZWISCHEN EINER HAUPTEINHEIT UND EINEM ENDGERÄT
UNITÉ DE COMMUNICATION INFRAROUGE POUR RELAYER ENTRE UNE UNITÉ PRINCIPALE ET UNE UNITÉ TERMINALE

(30) Priority: 25.03.2004 JP 2004089904; 12.05.2004 JP 2004142446; 12.05.2004 JP 2004142447
(43) Date of publication of application: 13.12.2006
(73) Proprietor: Toa Corporation, Kobe-shi, Hyogo-ken 650-0046 (JP)
(72) Inventor: YOSHIKAWA, Susumu, c/o TOA CORPORATION, Kobe-shi Hyogo 6500046 (JP); OKAZAKI, Narutoshi, c/o TOA CORPORATION, Kobe-shi Hyogo 6500046 (JP)
(74) Representative: Heusler, Wolfgang
(86) International application number: PCT/JP2005/005496
(87) International publication number: WO 2005/093974

(56) References cited:
- EP-A- 0 091 271
- JP-A- 8 065 245
- JP-A- 8 228 179
- JP-A- 8 242 205
- JP-A- 8 293 902
- JP-A- 10 229 368
- JP-A- 2000 068 939
- JP-A- 2000 329 975
- JP-U- 3 057 949
- US-A- 4 456 793
- US-A- 5 600 471
- US-A- 5 838 116

## Description

### Technical Field

This invention relates to a light receiver receiving light, such as infrared light, and producing a received-light representative electrical signal, and also to an infrared communication unit in which infrared light is used as a medium for communications.

### Background Technique

As a light receiving device of a light receiver of the above-described type, a photodiode and a phototransistor are frequently used. A photodiode, for example, has such a structure that its semiconductor section, which provides a light-receiving surface, is exposed, and has high impedance, and, therefore, it exhibits considerable sensitivity not only to light but also electromagnetic waves. Accordingly, photodiodes are shielded against electromagnetic waves. An arrangement for shielding a photodiode against electromagnetic waves is disclosed in, for example, Patent Literature 1.

According to the known technique disclosed in this Patent Literature 1, a rest is mounted on a substrate at a predetermined angle with respect to the substrate. A plurality of photodiodes are mounted on the rest in such a manner as to be able to receive light from the respective intended directions. One electromagnetic shield case is mounted over the substrate to cover all of the photodiodes.

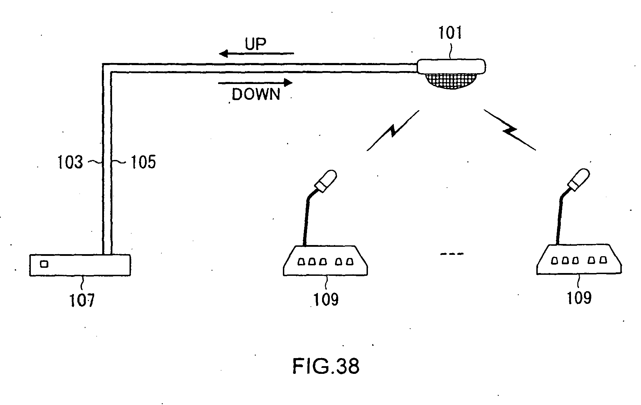

An example of infrared communication units of the above-described type is an infrared conference system (Model: ATCS-50) disclosed in Non-Patent Literature 1. According to the known technique disclosed in this Non-Patent Literature 1, a multi-channel light receiving/emitting unit 101 (Model: ATCS-A50), acting as, so to speak, a relay device, is mounted on a ceiling of a conference room, for example, as shown in FIGURE 38. The multi-channel light receiving/emitting unit 101 is connected to a master control unit 107 (Model: ATCS-C50), a main unit, installed in a corner of the conference room, for example, through two coaxial cables 103 and 105. At locations in the conference room, a plurality of terminal units, e.g. conference microphone units (Model: ATCS-M50) 109, 109, ..., are disposed.

In this arrangement, when speech is given through a conference microphone unit 109, for example, an UP FM (Frequency Modulation) signal corresponding to the sound uttered is generated. The conference microphone unit 109 has an infrared-light emitting diode (not shown), which emits light upon receipt of the UP FM signal, and the infrared light emitted from this infrared-light emitting diode is incident on the multi-channel light receiving/emitting unit 101.

The multi-channel light receiving/emitting unit 101 includes a light-receiving circuit (not shown) for receiving the incident infrared light, and the infrared light received by the light receiving circuit is converted to an electrical signal, resulting in reproduction of the UP FM signal. The reproduced UP FM signal is transmitted to the master control unit 107 through the coaxial cable 103 dedicated for up-going.

The UP FM signal received through the up-going dedicated coaxial cable 103 is subjected to demodulation processing in the master control unit 107. The demodulated signal is applied to a loudspeaker (not shown) connected to the master control unit 107, which results in reproduction of the originally uttered sound (content of the statement). A DOWN FM signal in a different frequency range from the UP FM signal is generated in accordance with the thus demodulated signal. The DOWN FM signal is then sent to the multi-channel light receiving/emitting unit 101 through the coaxial cable 105 dedicated for down-going.

The multi-channel light receiving/emitting unit 101 has an infrared-light emitting diode (not shown), which emits light in accordance with supply of a FM signal received through the down-going dedicated cable 105. The infrared light emitted by the infrared-light emitting diode is incident on the respective conference microphone units 109.

Each of the conference microphone units 109 includes a light-receiving circuit (not shown) for receiving the incident infrared light. The infrared light received by the light-receiving circuit is converted to an electrical signal, whereby the DOWN FM signal is reproduced. The reproduced DOWN FM signal is subjected to demodulation processing, and the demodulated signal is inputted to a monitor loudspeaker (not shown) built in that conference microphone unit 109. As a result, the sound uttered from the utterance source is reproduced also in the respective conference microphone units 109.

According to the technique disclosed in this Non-Patent Literature 1, speech can be made simultaneously through as many as four conference microphone units 109. In other words, four channels are provided as up-going sound channels extending from the conference microphone units 109 to the master control unit 107 via the multi-channel light receiving/emitting unit 101. On the other hand, two channels are provided, as down-going sound channels, extending from the master control unit 107 to the conference microphone units 109 via the multi-channel light receiving/emitting unit 101. One of the two channels, which is a main sound channel, is used to transmit sound uttered by a speaker (DOWN FM signal), for example, described above, and the other one is a supplementary sound channel and is used for transmitting, for example, sound resulting from simultaneous interpretation of the sound (content of the utterance) uttered by the speaker. A channel selection switch (not shown) is provided for each of the conference microphone units 109 for selecting a desired one of the main and supplementary sound channels. Only the sound transmitted via the channel selected through the channel selection switch (i.e. the sound uttered by the speaker or its simultaneous interpretation) is reproduced through the monitor loudspeaker. In addition to these sound channels, one control channel is provided.

[Patent Literature 1]
   JP 2002-190617 A
[Non-Patent Literature 1]
   Product Instruction Book of IR Conference System "ATCS-50" manufactured by Audio-Technica Corporation; [online]: Internet <URL; http://www.audio-technica.co.jp/proaudio/infrared/atcs-50/ATCS-50.html.
   [Searched on March 23, 2004]

Patent application US-A-5600471 discloses an infrared communication unit for relaying signals between a main unit and a terminal unit, the infrared unit comprising an AGC amplifier for adjusting the level of an electrical output signal.

### Disclosure of the Invention

### Problems to be solved by the Invention

The invention concerns an infrared communication unit according to claim 1. The main objective of the claimed invention is to ensure that the electrical signals relayed by the infrared unit in the UP direction reach the center unit with a constant level regardless of whether mixer distributor module(s) are or are not interposed between the center unit and the infrared unit.

According to the known technique disclosed in Patent Literature 1, an electromagnetic shield case must be formed to cover all of the photodiodes. This causes equipment with the photodiodes and the electromagnetic shield case to become large-sized.

According to the known technique disclosed in Non-patent Literature 1, the multi-channel light receiving/emitting unit 101 and the master control unit 107 are interconnected by the two coaxial cables 103 and 105. In other words, the up-going dedicated coaxial cable 103 and the down-going dedicated coaxial cable 105 are separately provided. This causes the system as a whole to become complicated and expensive. This problem becomes more distinct as the coaxial cables 103 and 105 become longer.

There is another problem. As described above, a plurality (two) of down-going sound channels are provided. When such plural sound channels are simultaneously used for communications, the light-receiving sensitivity of the multi-channel light receiving/emitting unit 101 to infrared light from the conference microphone unit 109 decreases due to intermodulation product. Specifically, the infrared-light emitting diode of the multi-channel light receiving/emitting unit 101 is what is called a nonlinear device having a light-emitting output of a value which is not proportional to the forward voltage applied to it. Therefore, when a plurality of DOWN FM signals in different frequency ranges are applied to such infrared-light emitting diode, or, in other words, when such a plurality of FM signals modulate the brightness, intermodulation product depending on the plural frequency ranges of the FM signals is generated. The multi-channel light receiving/emitting unit 101 also has another function of receiving relatively weak infrared light sent from the respective conference microphone units 109. If, therefore, the intermodulation product occurs in the same frequency range as the UP FM signal contained in the weak infrared light, the intermodulation product acts as noise, resulting in reduction of the infrared-light receiving sensitivity of the multi-channel light receiving/emitting unit 101. This problem becomes severer as the distance between the infrared-light emitting diode and the light receiving circuit receiving infrared light.

Furthermore, with the known technique disclosed in Non-Patent Literature 1, there is a possibility that normal infrared communications may be interfered by, for example, the solar light. Specifically, when the solar light is incident on one of the conference microphone units 109 at the window or on the multi-channel light receiving/emitting unit 101, infrared energy contained in the solar light acts as large noise, which interferes with infrared communications between that conference microphone unit 109 and the multi-channel light receiving/emitting unit 101. In order to avoid such problem, the conference microphone units 109 and the multi-channel light receiving/emitting unit 101 may be disposed in such a manner as not to be influenced by the solar light, or light-blocking means such as blinds may be used to block the solar light, for example. However, it is very troublesome to employ such countermeasures.

In these days, a plasma display unit may be installed in a conference room or the like for presentation. It is known that infrared light, which may be noise interfering the infrared communications using the known technique, is radiated from the screen of such plasma display units. Accordingly, also in an environment where a plasma display unit is installed, it is necessary to arrange the conference microphone units 109 and the multi-channel light receiving/emitting unit 101 not to be influenced by infrared light radiated from the plasma display screen, or other countermeasures, such as attaching an infrared radiation blocking film (or sheet) to the plasma display screen, must be taken, which is very troublesome.

Discharge-type illumination devices, such as xenon discharge tubes, are also known as noise sources which give adverse influence to the known technique. Thus, also in an environment where such discharge-type illumination devices are used, troublesome countermeasures against adverse influence from the discharge-type illumination devices must be taken, as in an environment where plasma display units are installed.

Therefore a first object of the present invention is to provide a light receiver, which can realize down-sizing of equipment with the light receiver mounted thereon, relative to the known technique disclosed in Patent Literature 1.

A second object of the present invention is to provide an infrared communication unit, which is simpler and less expensive and has a higher light-receiving sensitivity than the known technique disclosed in Non-Patent Literature 1.

A third object of the invention is to provide such infrared communication unit which is freed from influence of a noise source more efficiently with a much simpler arrangement than the known technique disclosed in Non-Patent Literature 1.

### Means for Solving the Problems

In order to realize the first object, a light receiver according to a first invention includes a light receiving device generating an electrical signal in response to reception of light by a light receiving device. A photodiode or a phototransistor, for example, may be used as the light receiving device. A light-transmissive, electromagnetic shield cover is provided on the side of the light receiving device on which light is incident.

According to the first invention, an electromagnetic shield cover is mounted on each light receiver, and, therefore, different from the known technique disclosed in Patent Literature 1, an electromagnetic shield cover which can cover all of a plurality of light receivers is not necessary. Accordingly, equipment with the light receiver mounted thereon, and, in particular, equipment with a plurality of light receivers mounted thereon can be down-sized.

In this first invention, the electromagnetic shield cover may be formed integral with the light receiving device. For example, the light receiving device may be provided with a light-transsmissive member, e.g. a condenser lens, disposed in front of the light-receiving surface, with the electromagnetic shield cover integrally formed inside of the light-transmissive member.

Alternatively, the electromagnetic shield cover may be formed as a separate member from the light receiving device, with the electromagnetic shield cover on the light-receiving side of the light receiving device mounted on a substrate, particularly, a substrate on which circuitry the light receiving device is electrically connected to is arranged.

The light receiving device, may be mounted on the electromagnetic shield cover, which includes a substrate securing section. The substrate securing section and the electromagnetic shield cover are desirably formed as a single unit. Also, it is desirable that a predetermined angle be formed between the substrate securing section and the electromagnetic shield cover. The substrate securing section is engageable with a fixing section on the substrate. The light receiving device is at a predetermined angle when the substrate securing section is in engagement with the fixing section. With this arrangement, by making the substrate securing section engage with the fixing section, the light receiving device is oriented at a predetermined angle. Thus, an operation to mount the shield case and the light receiving device by engaging the substrate securing section with the fixing section can also adjust the angle of the light receiving device, and, therefore, the orientation of the light receiving device need not be separately adjusted. In addition, by simply preparing the electromagnetic shield cover adapted for the angle at which the light receiving device is to be oriented, the light receiving device can be oriented at the desired angle without need for providing any modifications to the substrate and other members. Since the precision of angle of the light receiving device is dependent on the precision of the electromagnetic shield cover, the precision of angle of the light receiving device is far better than known devices. Since a simple operation of engaging the substrate securing section with the fixing section can secure a sufficient precision of angle of the light receiving device, no special working for securing the precision of angle of the light receiving device is required. Thus, the assemblage is simpler, which means reduction of assembling costs. Furthermore, the cost of the electromagnetic shield cover is low, resulting in reduction of the cost of the light receiver.

The light receiving device may be mounted on a mount board, which, in turn, is attached to the electromagnetic shield cover. With the light receiving device mounted on the mount board, the light receiving device can be connected to electrical circuitry on the substrate through the mount board.

A light emitting device may be mounted on the mount board. In this case, too, the light emitting device can be disposed at a predetermined angle with respect to the substrate without need for adjustment.

A plurality of such light receiving devices may be used with the same number of mount boards and the same number of shield covers. By the use of these shield covers, corresponding light receiving devices are disposed at the same angle. With this arrangement, it is easy for all of the light receiving devices to be disposed at the predetermined angle with respect to the substrate.

The electromagnetic shield cover may be flat, which make it possible to down-size the light receiver itself, resulting, in turn, down-sizing of equipment on which the light receiver is mounted. When a plurality of light receivers are used, it is sometimes desired that the use of some of them be stopped because of incidence of interfering light on them. In such case, since the electromagnetic shield covers are flat, a light-blocking member, such as light-blocking sheet, can be simply attached to the flat portion to thereby easily avoid reception of interfering light.

In order to achieve the second object, an infrared communication unit according to a second invention includes receiving means for receiving a plurality of first signals in different frequency ranges, which are mixed together and transmitted through one transmission line, light-emitting means, including an infrared-light emitting diode, for causing the infrared-light emitting diode to emit light in accordance with the first signals as received by the receiving means, light-receiving means receiving infrared light generated in accordance with a second signal in a particular frequency range different from the frequency ranges of the first signals and reproducing the second signal, and transmitting means for transmitting the second signal as reproduced by the light-receiving means into the transmission line. The characteristic of the infrared-light emitting diode is such that the emitted light output value is approximately proportional to the value of a forward current. The light-emitting means operates to cause the infrared-light emitting diode to emit light by supplying a current of a value depending on the magnitudes of the plural first signals to the infrared-light emitting diode in the forward direction.

According to the second invention, a plurality of first signals in different frequency ranges are transmitted, being mixed together, through a single transmission line. The plurality of first signals are received by receiving means, and the plurality of first signals as received by the receiving means are applied to light-emitting means. The light-emitting means is provided with an infrared-light emitting diode and causes the infrared-light emitting diode to emit light in accordance with the plural first signals as applied from the receiving means, whereby infrared light based on the plural first signals is emitted from the infrared-light emitting diode. Infrared light is generated in accordance with a second signal in a particular frequency range different from the frequency ranges of the first signals, and is received by light-receiving means. The light-receiving means reproduces the second signal from the received infrared light, and the reproduced second signal is sent into the transmission line by transmitting means. Thus, the plural first signals in accordance with which infrared light is emitted, as well as the second signal reproduced from the received infrared light are transmitted through the common single transmission line.

The infrared-light emitting diode has such a characteristic that its light output value is approximately proportional to the value of current flowing in the forward direction. That is, the infrared-light emitting diode exhibits a linear characteristic with respect to the forward current. The light-emitting means supplies current having a value dependent on the magnitude of the plurality of first signals to flow in the forward direction through the diode, causing the infrared-light emitting diode to emit light. By doing so, the infrared-light emitting diode can be operated as a linear device, whereby the previously described generation of intermodulation product can be avoided. Accordingly, reduction of light-receiving sensitivity due to intermodulation product can be also avoided.

Each of the plurality of first signals is desirably a frequency-modulated, FM, signal. Also, the second signal is desirably a FM signal.

The light-emitting means may include converting means for converting the plural first signals into current, and current supply means for causing the current as converted by the converting means to flow into the infrared-light emitting diode.

The light-receiving means may be disposed near the infrared-light emitting diode. According to this second invention, since no intermodulation product is generated by the infrared light emitted from the infrared-light emitting diode, as described above, the light-receiving sensitivity of the light-receiving means does not decrease even if the light-receiving means is disposed near the infrared-light emitting diode. The fact that the light-receiving means can be disposed near the infrared-light emitting diode is advantageous in downsizing the device as a whole.

There may be additionally provided detecting means for detecting the magnitude, e.g. signal level, of the plural first signals as received by the receiving means, and first adjusting means for adjusting the level of the plural first signals to a predetermined signal level in accordance with the result of the detection by the detecting means, whereby the following disadvantage can be avoided.

As the transmission line is longer, the signal level of the plural first signals transmitted through the transmission line decreases more. The presence of signal attenuating means, e.g. a mixer/distributor, in the transmission line also decreases the signal level of the plural first signals. In other words, the signal level of the plural first signals is dependent on the length of the transmission line and the presence or absence of any signal attenuating means in the transmission line. Accordingly, if, for example, the infrared-light emitting diode is caused to emit light according to the plural first signals as received by the receiving means, the light output value (optical output energy) is also dependent on the length of the transmission line and the presence or absence of signal attenuating means. In other words, there may be cases where the infrared-light emitting diode disadvantageously cannot emit light at high efficiency. In order to remove such disadvantage, the signal level of the plural first signals as received by the receiving means is detected by the detecting means, and, based on the detection result, the signal level of the plural first signals is adjusted, by the first adjusting means, to a predetermined level, e.g. a level appropriate for making the infrared-light emitting diode emit light at high efficiency. In this manner, regardless of the length of the transmission line and the presence or absence of signal attenuating means, the infrared-light emitting diode can be operated to emit light at high efficiency.

Similarly, there may be provide second adjusting means for adjusting the magnitude of the second signal in accordance with the result of detection by the detecting means.

Specifically, similar to the first signals described above, the signal level of the second signal sent into the transmission line changes depending on the length of the transmission line and the presence or absence of signal attenuating means. In other words, the signal level of the second signal as received at the receiving side changes. It is, therefore, desirable that the second adjusting means be provided in order to make the signal levels at the receiving sides constant. The second adjusting means adjust the signal level of the second signal in accordance with the result of detection made by the detecting means. With this arrangement, regardless of the length of the transmission line and the presence or absence of signal attenuating means, the received signal levels of the second signal at the receiving sides are constant.

In order to achieve the above-described third object, an infrared communication unit according to a third one of the present inventions includes a plurality of light-receiving means providing first communication regions different from each other and receiving and converting infrared light sent from the respective first communication regions to first signals, and first deactivating means for manually deactivating respective ones of the light-receiving means.

According to the third invention, there are provided a plurality of light-receiving means by which a plurality of different, first communication regions are formed. The respective ones of the light-receiving means receive and convert infrared light sent from the first communication regions associated therewith to first signals. The individual ones of the light-receiving means can be electrically deactivated manually by means of the first deactivating means. Thus, if a noise source, for example, is present in the first communication region formed by one of the light-receiving means, that light-receiving means can be manually made inactive electrically so as to be free from influence from such noise source.

Desirably, the first deactivating means deactivates the light-receiving means to be deactivated by stopping power supply to that light-receiving means, whereby power which would be consumed by that light-receiving means can be saved, resulting in reduction of the power consumption of the infrared communication unit as a whole.

A plurality of light-emitting means may be provided to form a plurality of second communication regions containing regions common to the respective ones of the first communication regions. In such case, it is desirable to use second deactivating means for electrically deactivating the respective ones of the second communication regions manually. When a light-receiving means is inactive, the first communication region associated with the inactive light-receiving means does not participate in communications. Accordingly, when the infrared communication unit includes not only a plurality of light-emitting means emitting infrared light, but also a plurality of light-receiving means, there is no need for directing infrared light to such nonparticipation regions. Therefore, in order to preclude unnecessary emitting of infrared light to such regions, it is desirable to use the second deactivating means to individually deactivate the light-projecting means.

The second deactivating means may be arranged to be operated in conjunction with the first deactivating means. Specifically, it may be so arranged that, when some light-receiving means is deactivated by the first deactivating means, the light-emitting means forming a second communication region containing a region common to the first communication region formed by the deactivated light-receiving means can be deactivated by the second deactivating means.

It is desirable for the second deactivating means, too, to deactivate light-emitting means by stopping the supply of power to that light-emitting means to be deactivated.

In this case, it is desirable that additional power supply means may be provided for additionally providing the power, which otherwise would be supplied to the deactivated light-emitting means, to other light-emitting means, so that emitted light output from active light-emitting means can increase, resulting in the device less tending to be affected by noise sources.

### Brief Description of the Drawings

[FIGURE 1] is a perspective view of an infrared emitting/receiving unit employing light receivers according to a first embodiment of the present invention.
[FIGURE 2] is a side view of the infrared emitting/receiving unit of FIGURE 1.
[FIGURE 3] is an exploded view of the light receiver of FIGURE 1.
[FIGURE 4] is a side view of the light receiver of FIGURE 1.
[FIGURE 5] is a perspective view of the light receiver of FIGURE 1.
[FIGURE 6] is a side view of the light receiver of FIGURE 1 mounted on a substrate.
[FIGURE 7] are front and side views and an equivalent circuit diagram of a light receiver according to a second embodiment of the invention.
[FIGURE 8] is an equivalent circuit diagram of a modification of the light receiver of FIGURE 7.
[FIGURE 9] is a block diagram illustrating schematic arrangement of an infrared conference system according to a third embodiment of the invention.
[FIGURE 10] is a list of channels used in the infrared conference system of FIGURE 9.
[FIGURE 11] is a block diagram illustrating an inner arrangement of a center unit shown in FIGURE 9.
[FIGURE 12] is a block diagram illustrating an inner arrangement of a mixer/distributor shown in FIGURE 9.
[FIGURE 13] is a block diagram illustrating an inner arrangement of a light emitting/receiving unit shown in FIGURE 9.
[FIGURE 14] is an electric circuit diagram illustrating details of a light-emitting circuit shown in FIGURE 13.
[FIGURE 15] is a graph showing the emitted light output to forward current characteristic of an infrared-light emitting diode shown in FIGURE 14.
[FIGURE 16] is a graph showing the series resistance to forward current characteristic of a PIN diode shown in FIGURE 13.
[FIGURE 17] is an electric circuit diagram illustrating details of a current control circuit shown in FIGURE 13.
[FIGURE 18] shows a waveform of a voltage at a point Pd in FIGURE 14.
[FIGURE 19] is a block diagram illustrating a schematic arrangement of an infrared conference system according to a fourth embodiment of the invention.
[FIGURE 20] is a list of channels used in the infrared conference system of FIGURE 19.
[FIGURE 21] shows a communication area, seen from the lateral direction, of a light emitting/receiving unit shown in FIGURE 19.
[FIGURE 22] shows the communication area, seen from above, of the light emitting/receiving unit shown in FIGURE 19.
[FIGURE 23] schematically shows an inner arrangement of the light emitting/receiving unit shown in FIGURE 19.
[FIGURE 24] illustrates a communication area, seen from the lateral direction, of a terminal unit shown in FIGURE 19.
[FIGURE 25] schematically shows an inner arrangement of the terminal unit shown in FIGURE 19.
[FIGURE 26] is a block diagram illustrating an electric arrangement of the light emitting/receiving unit shown in FIGURE 19.
[FIGURE 27] is a block diagram illustrating details of a light-receiving circuit shown in FIGURE 26.
[FIGURE 28] is an electric circuit diagram showing further details of a photoelectric converter circuit shown in FIGURE 27.
[FIGURE 29] is a block diagram showing details of a light-emitting circuit shown in FIGURE 26.
[FIGURE 30] is an electric circuit diagram showing further details of a brightness modulation circuit shown in FIGURE 29.
[FIGURE 31] is a block diagram showing an electrical arrangement of a terminal unit shown in FIGURE 19.
[FIGURE 32] is an electric circuit diagram showing details of the light-receiving circuit shown in FIGURE 31.
[FIGURE 33] is an electric circuit diagram showing details of the light-emitting circuit shown in FIGURE 31.
[FIGURE 34] shows an external noise source present in communication areas of some light emitting/receiving units of the infrared conference system shown in FIGURE 19.
[FIGURE 35] illustrates how influences of the external noise source can be removed in FIGURE 34.
[FIGURE 36] shows an external noise source present in communication areas of some terminal units of the infrared conference system shown in FIGURE 19.
[FIGURE 37] illustrates how influences of the external noise source can be removed in FIGURE 37.
[FIGURE 38] is a block diagram schematically illustrating an arrangement of a known infrared conference system.

### Best Mode to Carry out the Invention

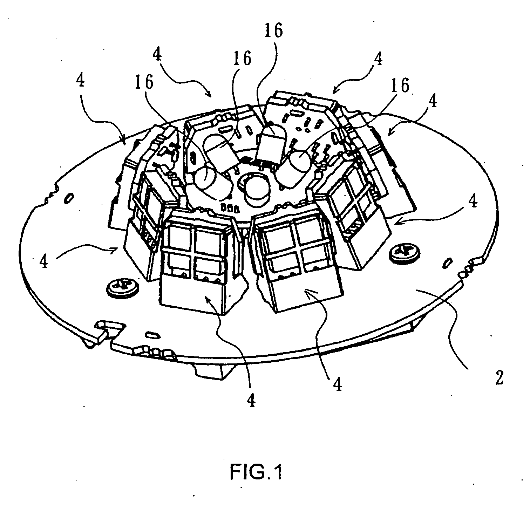

Referring to FIGURES 1-6, a light receiver according to a first embodiment of the invention is described.

The light receiver according to the first embodiment may be used in an infrared light emitting/receiving unit as used in an infrared conference system 1010 according to a third embodiments described later (or in an infrared conference system 2010 according to a fourth embodiment). In an infrared conference system, bidirectional optical communications (infrared communications) by means of infrared light are exchanged between terminal units placed on a table, for example, and infrared light emitting/receiving units disposed on a ceiling, for example.

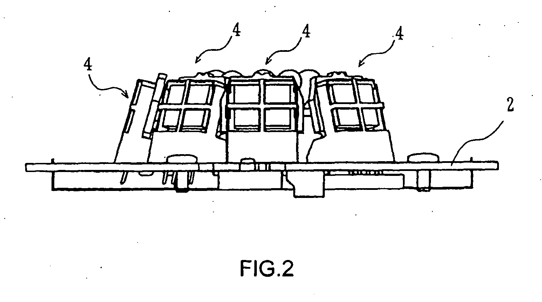

The infrared light emitting/receiving unit includes plural light receivers 4 disposed in a circle on a substrate 2, as shown in FIGURES 1 and 2. The substrate 2 is a printed-circuit board, which may be disc-shaped and has a predetermined circuit pattern formed on a surface opposite to the surface on which the light receivers 4 are disposed. Each light receiver 4 receives infrared light emitted from the above-stated terminal units and generates an electrical signal.

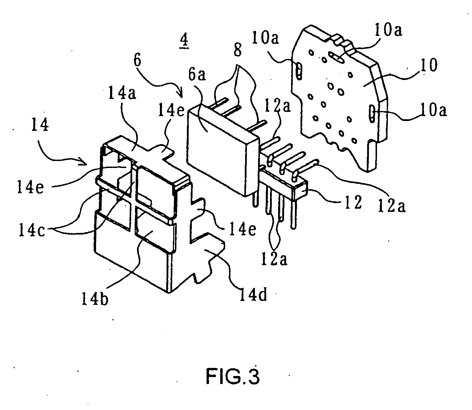

Each light receiver 4 has a light receiving device, e.g. a photodiode 6, as shown in FIGURE 3. The photodiode 6 is of a planar type, and infrared light is incident on a front, light-receiving surface 6a. Plural leads 8 extend out from a rear surface of the photodiode 6. The photodiode 6 is disposed in such a manner that its rear surface contacts a mounting plate, e.g. a mounting surface of a small printed circuit board 10. Each lead 8 is connected to predetermined locations on a pattern formed on the small printed circuit board 10. For that purpose, the light-receiving surface 6a of the photodiode 6 and the mounting surface of the small printed circuit board 10 are in parallel. A connector terminal 12 is disposed on the small printed circuit board 10 in a portion below the photodiode 6, with one end of each of pins 12a of the connector terminal 12 inserted into predetermined locations of the small printed circuit board 10 and connected to the pattern formed on the small printed circuit board 10. The other ends of the pins 12a are inserted into predetermined locations in the substrate 2, so that the photodiode 6 is connected to the predetermined pattern on the substrate 2.

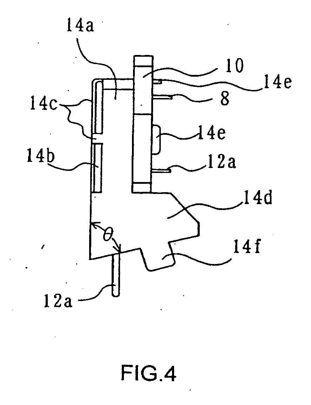

An electromagnetic shield cover 14 is disposed on the side facing the light-receiving surface 6a of the photodiode 6. The electromagnetic shield cover 14 is made of a electrically conductive material, such as iron and aluminum, and includes a frame member 14a of such a size as to be capable of covering the upper and both lateral sides of the photodiode 6 and the connector terminal 12. The size of the frame member 14a is slightly smaller than that of the small printed circuit board 10. A window 14b corresponding to and extending in parallel with the light-receiving surface 6a of the photodiode 6 is formed in the front portion of the frame member 14a. A cross-shaped bar member 14c quartering the window 14b is formed in the window 14b. A straight substrate-securing member 14d is formed to be integral with and extend from the lower portion of each of the lateral portions of the frame member 14. As shown in FIGURE 4, each of the substrate securing portions 14d is disposed at a predetermined angle, for example, an acute angle of θ with the frame member 14a.

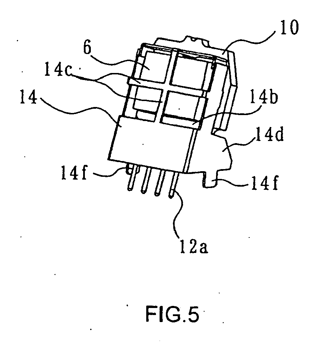

A lip 14e is formed to extend straight backward from the center of the rear portion of each of the upper and lateral sides of the frame member 14a. The lips 14e are integral with the frame member 14a. The lips 14e are inserted into corresponding slots 10a in the small printed circuit board 10 and secured to the board 10 by, e.g. soldering, whereby, as shown in FIGURE 5, the electromagnetic shield cover 14 is mounted to the small printed circuit board 10 with the window 14b kept in parallel with the light-receiving surface 6a of the photodiode 6. Thus, the light-receiving surface 6a of the photodiode 6 is covered by the electromagnetic shield cover 14. Since the electromagnetic shield covers 14 are attached to the individual ones of the photodiodes 6, and, in addition, since the photodiodes 6 are planar, with the light-receiving surfaces 6a thereof covered with the electromagnetic shield cover 14 disposed close to the surfaces 6a, the thickness of the light receiver 4 can be reduced.

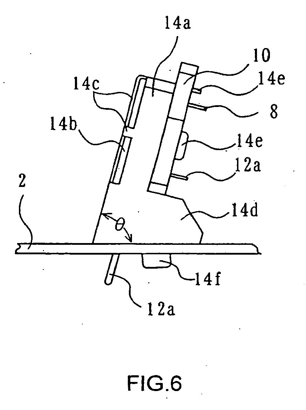

Engaging portions., e.g. lips 14f, are formed integral with the both substrate securing portions 14d, which lips 14f extend perpendicular to the substrate securing portions 14d. The lips 14f are made to engage with securing portions, e.g. inserted into slots (not shown), formed in the substrate 2 at locations corresponding to the lips 14f and are soldered to a reference potential pattern (not shown) on the substrate 2, as shown in FIGURE 6. With the lips 14f soldered, the lower portions of the securing portions 14d are in contact with the substrate 2, so that the electromagnetic shield cover 14 and the photodiode 6 are mounted to the substrate at the predetermined angle θ. Furthermore, since the electromagnetic shield cover 14 is connected to the reference potential pattern, it can electromagnetically shield the photodiode 6.

With this light receiver arrangement, when the electromagnetic shield cover 14 of the light receiver is attached to the substrate 2, the photodiode 6 is automatically oriented at the predetermined light-receiving angle. Accordingly, there is no need for adjusting the light-receiving angle of the photodiode 6 after it is mounted. The light-receiving angle does not change, and it remains the same even when the cover 14 is mounted to another substrate 2 with the same structure. Thus, the light-receiving angle does not change among substrates. The substrate 2 is mounted on the ceiling with the respective light receivers 4 facing downward so that they can receive infrared light sent from terminal units on tables or the like.

As shown in FIGURE 1, the infrared light emitting/receiving unit includes plural light emitting devices, e.g. LEDs 16, mounted in a circle on the substrate 2 at a predetermined angle with the substrate 2 and disposed inward of the light receivers 4. The LEDs 16, when the substrate 2 is attached to the ceiling as described above, emit infrared light toward the terminal units on the tables. Although not shown, an infrared-transmissive cover is placed over the light receivers 4 and the LEDs 16 on the substrate 2.

According to the first embodiment, the light receivers 4 and the LEDs 16 are separately mounted on the substrate 2. The small printed circuit boards 10 may be extended, and the LEDs 16 may be mounted on the extensions of the boards 10. With such arrangement, the mounting of the shield covers 14 to the substrate 2 results in mounting of the light receivers 4 and the LEDs 16, and the light receivers 4 and the LEDs 16 can be set at respective predetermined angles without need for angle adjustment.

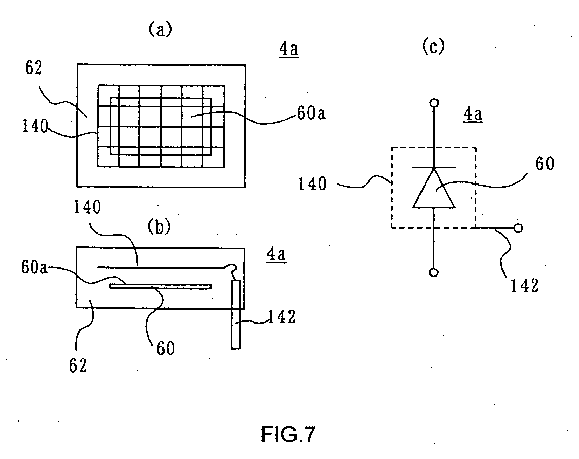

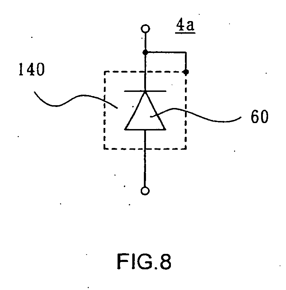

Next, a light receiver according to a second embodiment is described with reference to FIGURES 7 and 8.

The light receiver 4 according to the first embodiment has the electromagnetic shield cover 14 as a member separate from the photodiode 6. A light receiver 4a according to the second embodiment includes an electromagnetic shield cover 140 which is integral with a photodiode 60. As shown in FIGURES 7(a) and 7(b), the photodiode 60 is entirely encapsulated in a casing 62 made of an infrared-transmissive resin. The electromagnetic shield cover 140 is disposed within the casing 62 at a location spaced by a predetermined distance in front of a light-receiving surface 60a of the photodiode 60. The electromagnetic shield cover 140 is a grating of electrically conductive material, which can cover the entire of the light-receiving surface 60a of the photodiode 60. A lead 142 is connected to the electromagnetic shield cover 140, and it is led out of the casing 62 for connection to reference potential. It should be noted that, in FIGURES 7(a) and 7(b), leads to the photodiode 60 are not shown. FIGURE 7(c) is an equivalent electric circuit diagram of the light receiver 4a.

The light receivers 4 according to the second embodiment, too, include the electromagnetic shield covers 140 one for each photodiode 60. Accordingly, the light receivers 4a can be downsized further than the light receivers 4 according to the first embodiment. This means that an unit like an infrared light emitting/receiving unit on which the light receivers 4a according to the second embodiment are employed can be further downsized, too.

The light receiver 4a of the second embodiment includes the lead 142 for use in connecting the electromagnetic shield cover 140 to reference potential. However, since the photodiode 60 is usually reverse-biased with the cathode AC connected to reference potential, the lead 142 can be eliminated by connecting the electromagnetic shield cover 140 to the cathode within the casing 62 as shown in FIGURE 8.

In the second and first embodiments described above, a photodiode is used as the light receiving device, but the light receiving device is not limited to photodiodes, and a phototransistor, for example, may be used instead. Further, a technique as described with reference to the first and second embodiments can be employed for electronic apparatuses other than the infrared light emitting/receiving unit, e.g. apparatuses receiving light other than infrared light.

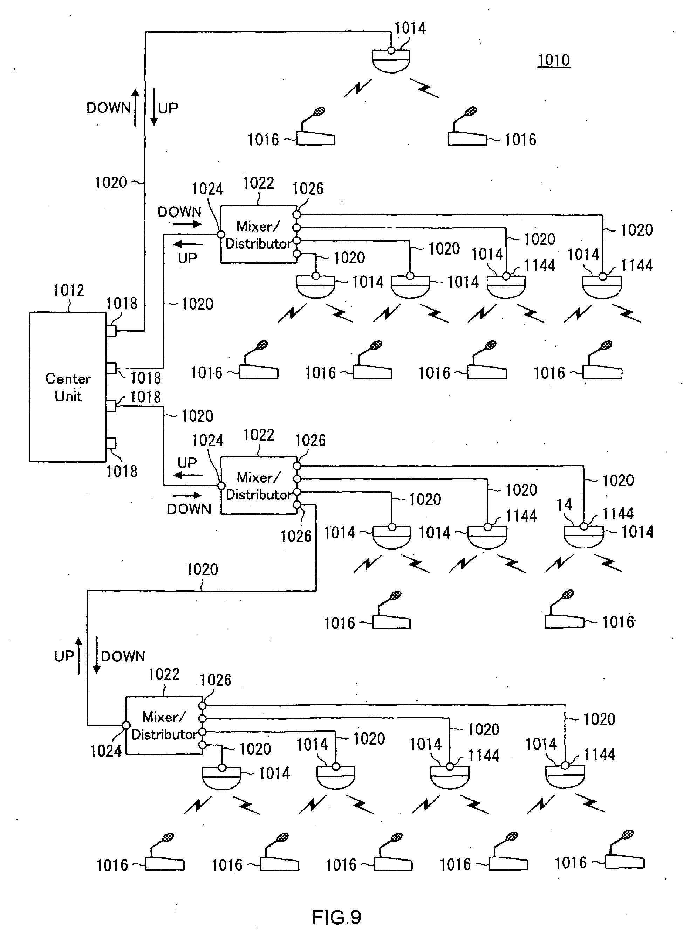

Next, an infrared conference system according to a third embodiment of the present invention is described with reference to FIGURES 9 through 18.

As shown in FIGURE 9, an infrared conference system 1010 according to the third embodiment includes one center unit 1012 as a main unit, plural light emitting/receiving units 1014, 1014,..., as infrared communication units, and plural terminal units 1016, 1016, ..., provided with individual identification numbers. The center unit 1012 is disposed at, for example, a corner of a conference room, and the respective light emitting/receiving units 1014 are mounted on the ceiling or walls of the conference room. The terminal units 1016 are disposed on appropriate positions, e.g. on tables in the conference room.

The center unit 1012 has plural, e.g. four, input/output terminals 1018, 1018, ... , to which the light emitting/receiving units 1014 are adapted to be connected. Specifically, as exemplified by the input/output terminal 1018 shown uppermost in FIGURE 9, one light emitting/receiving unit 1014 can be connected through one coaxial cable 1020 acting as a transmission line, or, as exemplified by the second uppermost input/output terminal 1018 in FIGURE 9, plural, e.g. four at the maximum, light emitting/receiving units 1014 can be connected to one terminal 1018 by the use of one mixer/distributor 1022. Further, as exemplified by the third uppermost input/output terminal 1018 in FIGURE 9, by the use of plural (two in FIGURE 9) mixer/distributors 1022, much more (five or more) light emitting/receiving units 1014 can be connected to one input/output terminal 1018. Also, as exemplified by the lowermost input/output terminal 1018, there may be a terminal (idle terminal) to which no light emitting/receiving unit 1014 is connected.

Each mixer/distributor 1022 has one primary terminal 1024 and four secondary terminals 1026, and operates to distribute a signal inputted through the primary terminal 1024 to the secondary terminals 1026, and to mix signals inputted through the secondary terminals 1026 for outputting via the primary terminal 1024. For that purpose, the primary terminal 1024 is connected via the coaxial cable 1020 to the input/output terminal 1018 or to the secondary terminal 1026 of another mixer/distributor 1022. Each of the secondary terminals 1026 is connected through the coaxial cable 1020 to one light emitting/receiving unit 1014 or to the primary terminal 1024 of another mixer/distributor 1022. There may be a secondary terminal 1026 to which nothing is connected. The mixer/distributors 1022 are disposed behind the ceiling board or behind the wall.

Overall operation of the infrared conference system 1010 is now described briefly. Let it be assumed, for example, that a request to speak is made through some terminal unit 1016. Such request is made by operating a speech request switch (not shown) provided on the terminal unit 1016. Then, upward (UP) control data indicative of generation of a speech request and of the requester (identification number) of the speech request is produced in that terminal unit 1016, and also a control UP FM signal in a predetermined frequency range is produced in accordance with the UP control data. The terminal unit 1016 includes an infrared-light emitting diode (not shown), and makes the infrared-light emitting diode to emit light based on the control UP FM signal. Thus, infrared light having a wavelength of 870 nm, for example, is emitted from the infrared-light emitting diode (terminal unit 1016).

The infrared light emitted from the terminal unit 1106 impinges on the light emitting/receiving unit 1014 near that terminal unit 1016. The light emitting/receiving unit 1014 has a later-mentioned light-receiving circuit 1140 acting as light-receiving means for receiving the incident infrared light. The infrared light received by the light-receiving circuit 1140 is converted to an electrical signal, whereby the above-mentioned UP FM control signal is recovered. The recovered UP FM control signal is transmitted to the center unit 1012 via the coaxial cable 1020, or the coaxial cable 1020 and one or more mixer/distributors 1022.

Upon receipt of the UP FM control signal from the light emitting/receiving unit 1014, the center unit 1012 demodulates the received UP FM control signal to derive the UP control data, and analyzes the derived UP control data to know that a speech request has been made and to find out the terminal unit 1016 making the speech request. The center unit 1012 prepares DOWN control data indicating that the subject terminal unit 1016 is permitted to speak and produces a DOWN FM control signal in a different frequency range from that of the UP FM control signal in accordance with the thus prepared DOWN control data. The DOWN FM control signal is transmitted to all of the light emitting/receiving units 1014 via the coaxial cables 1020, or the coaxial cable 1020 and one or more mixer/distributors 1022.

Each of the light emitting/receiving units 1014 has later-mentioned infrared-light emitting diodes 1142, each emitting light in response to the DOWN FM control signal transmitted to it from the center unit 1012. Then, all of the light emitting/receiving units 1014 (i.e. the infrared-light emitting diodes 1142) emit an infrared light ray having a wavelength of, for example, 870 nm, which impinges on the terminal units 1016.

Each terminal unit 1016 has a light-receiving circuit (not shown) for receiving incident infrared light, and the received infrared light is converted to an electrical signal, whereby the DOWN FM control signal is recovered. In each terminal unit 1016, the recovered DOWN FM control signal is demodulated to thereby derive the DOWN control data. Then, whether the derived DOWN control data is sent to that terminal unit or not, or, in other words, whether the identification number represented by the DOWN control data is the one of that terminal unit or not, is judged. Only the terminal unit 1016 which receives the DOWN control data sent to it is permitted to speak or, so to say, enabled.

When speech is made through the enabled terminal unit 1016, an UP FM signal according to the speech sound is generated. This UP FM signal is a signal having a different frequency range from the one of the above-described UP FM control signal, which is designated by the DOWN control data. The infrared-light emitting diode is then energized to emit light in accordance with the UP FM signal. In this manner, infrared light is emitted from the infrared-light emitting diodes.

The infrared light is incident on the light emitting/receiving units 1014 near the terminal unit 1016 through which speech is made. The incident infrared light is received by the above-mentioned light-receiving circuit 1140 and converted to an UP FM signal. The resulting UP FM signal is transmitted to the center unit 1012 via the same transmission paths as the above-mentioned UP FM control signal.

The center unit 1012 receives and demodulates the UP FM signal from the light emitting/receiving unit 1014. The resulting demodulated signal (sound signal) is inputted to a loudspeaker (not shown) connected to the center unit 1012, whereby the sound (speech) uttered by the speaker is reproduced. The center unit 1012 also generates a DOWN FM signal in accordance with the demodulated signal, which is transmitted to all of the light emitting/receiving units 1014 like the above-mentioned DOWN FM control signal.

At each light emitting/receiving unit 1014, the above-mentioned light emitting diode 1142 emits light in accordance with the DOWN FM signal sent from the center unit 1012. Thus, infrared light corresponding to the DOWN FM signal is emitted from all of the light emitting/receiving units 1014. The emitted infrared light impinges on the respective terminal units 1016.

At each terminal unit 1016, the incident infrared light is received by the above-mentioned light receiving circuit and converted into a DOWN FM signal. The DOWN FM signal is subjected to demodulation processing, and the resulting signal (sound signal) is inputted to a monitor loudspeaker (not shown) built in the terminal unit 1016. Thus the sound uttered by the speaker is reproduced or, so to speak, monitored at all of the terminal units 1016.

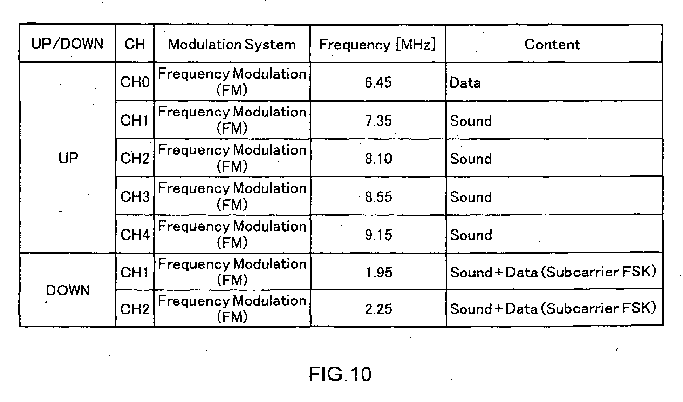

According to the third embodiment, it is so arranged that a maximum of four terminal units 1016 can be used simultaneously to make speech. In other words, there are provided four channels, or, so to speak, four UP sound channels, which extend from the respective terminal units 1016 via the light emitting/receiving units 1014 to the center unit 1012. Specifically, as shown in FIGURE 10, as the UP sound channels, four channels, namely, CH1, CH2, CH3 and CH4, are provided, which have center frequencies (carrier frequencies) at 7.35 MHz, 8.10 MHz, 8.55 MHz, and 9.15 MHz. In addition to the four UP sound channels CH1, CH2, CH3 and CH4, a control channel CH0 having a center frequency of 6.45 MHz is provided. The control channel is used for transmission of the above-mentioned control data.

On the other hand, two channels are provided as, so to say, DOWN sound channels, which extend from the center unit 1012 via the light emitting/receiving units 1014 to the respective terminal units 1016. Specifically, as shown in FIGURE 10, a channel CH1 having a center frequency at 1.95 MHz and a channel CH2 having a center frequency at 2.25 MHz are provided. The channel CH1 is a main sound channel for use in transmitting, for example, the speaker's sound (DOWN FM signal) originating from the speaker mentioned above, and the channel CH2 is a supplementary sound channel for use in transmitting, for example, sound of simultaneous interpretation of the sound (speech) uttered by the speaker.

Specifically, the simultaneous interpretation sound is inputted through a microphone (not shown) connected to, for example, the center unit 1012. A DOWN FM signal of the supplementary sound channel CH2 is generated in accordance with the simultaneous interpretation sound (sound signal) and is transmitted, being mixed with the main sound channel CH1 DOWN FM signal (the sound uttered by the speaker), to the respective light emitter-receivers 1014. Each light emitter-receiver 1014 generates infrared light corresponding to a composite signal resulting from combining the signals sent through the two channels CH1 and CH2. The emitted infrared light impinges on the respective terminal units 1016. Each of the terminal units 1016 has a channel selection switch (not shown) for use in selecting a desired one of the main and supplementary sound channels CH1 and CH2, and only the sound of the channel CH1 or CH2 (the sound uttered by the speaker or its simultaneous translation) selected through the channel selection switch is reproduced by the monitor loudspeaker.

The above-mentioned DOWN control data is provided with FSK (Frequency Shift Keying) processing and superposed as a subcarrier on the main sound channel CH1, before being transmitted. As for the supplementary sound channel CH2, desired control data may be superposed as a subcarrier.

As described above, according to the third embodiment, the center unit 1012 and each light emitting/receiving unit 1014 are interconnected by one coaxial cable 1020 (or one coaxial cable 1020 and a mixer/distributor 1022, in addition). The plural channels CH0-CH4 UP FM signals and the plural channels CH1 and CH2 DOWN FM signals are transmitted through this single coaxial cable 1020. Also, via this coaxial cable 1020, DC power for driving each of the light emitting/receiving units is supplied from the center unit 1012. For that purpose, the center unit 1012 has the following structure.

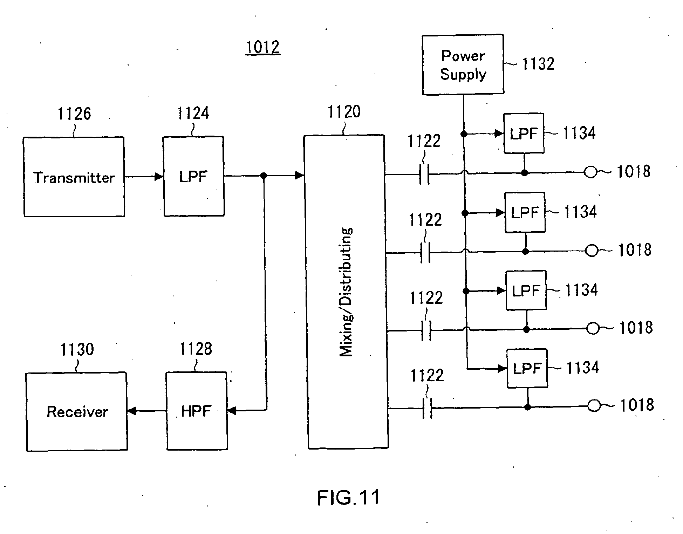

As shown in FIGURE 11, the center unit 1012 has a mixing/distributing circuit 1120, and the respective input/output terminals 1018 thereof are connected through respective DC blocking capacitors 1122 to the secondary side (i.e. the right side in FIGURE 11) of the mixing/distributing circuit 1120. A transmitter circuit 1126 is connected to the primary side (i.e. left side in FIGURE 11) of the mixing/distributing circuit 1120 via a low-pass filter (LPF) 1128. Also, a receiver circuit 1130 is connected to the primary side of the mixing/distributing circuit 1120 through a high-pass filter (HPF) 1128. The cutoff frequency of the low-pass filter 1124 is higher than the upper limit frequency for the DOWN channels CH1 and CH2 (which upper limit frequency is a frequency equal to 2.25 MHz plus a predetermined frequency range), and lower than the lower limit frequency of the UP channels CH0-CH4 (which lower limit frequency is a frequency equal to 6.45 MH minus a predetermined frequency range). For example, the cutoff frequency of the low-pass filter 1124 may be 2:39 MHz. On the other hand, the cutoff frequency of the high-pass filter 1128 is set to a frequency higher than the cutoff frequency of the low-pass filter 1124 and lower than the lower limit frequency of the UP channels CH0-CH4, which may be, for example, 6.63 MHz.

The center unit 1012 further includes a power supply circuit 1132, which generates the above-stated DC power for driving the respective light emitting/receiving units 1014. The DC power of, for example, +24 V. provided by the power supply circuit 1132 is supplied through respective low-pass filters 1134 to the respective input/output terminals 1018. The low-pass filters 1134 are used for AC blocking and have a cutoff frequency of from several hertz (Hz) to ten or so hertz (Hz).

UP FM signals from the light emitting/receiving units 1014 enter into the center unit 1012 arranged as described above through the respective input/output terminals 1018. The UP FM signals are inputted through the respective DC blocking capacitors 1122 to the secondary side of the mixing/distributing circuit 1120 where they are mixed. The mixed FM signals are outputted from the primary side of the mixing/distributing circuit 1120 and applied to the receiver circuit 1130 via the high-pass filter 1128. The receiver circuit 1130 provides the above-mentioned demodulation processing for the inputted, mixed FM signals, and the demodulated signals are sent to succeeding circuitry (not shown).

The DOWN FM signal is produced in the transmitter circuit 1126. The DOWN FM signal is applied through the low-pass filter 1124 to the primary side of the mixing/distributing circuit 1120, where it is divided into four. The divided DOWN FM signals are outputted from the secondary side of the mixing/distributing circuit 1120 and are sent to the respective input/output terminals 1018 through the respective DC blocking capacitors 1122. The DOWN FM signals at the input/output terminals are transmitted to the respective light emitting/receiving units 1014 via the coaxial cables 1020 or via the coaxial cables and one or more mixer/distributors 1022. It should be noted that, being superposed on the DOWN FM signal, the above-mentioned DC power is also sent to each light emitting/receiving unit 1014.

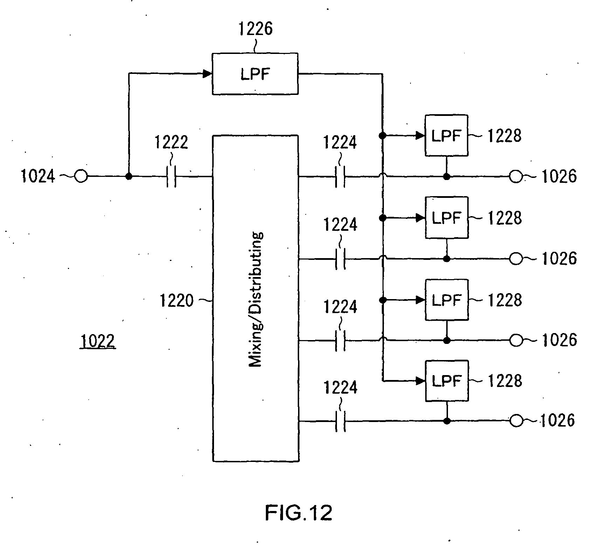

As shown in FIGURE 12, each of the mixer/distributors 1022 includes a mixing/distributing circuit 1220, to the primary side of which (i.e. the left side of in FIGURE 12) the primary terminal 1024 is coupled via a DC blocking capacitor 1222. The secondary side of the mixing/distributing circuit 1220 (i.e. the right side in FIGURE 12) is coupled to the secondary terminals 1026 via respective DC blocking capacitors 1224. Further, the primary terminal 1024 is coupled via an AC blocking low-pass filter 1226 and respective low-pass filters 1228 to the respective ones of the secondary terminals 1026. The cutoff frequencies of the low-pass filters 1226 and 1228 are from several hertz (Hz) to ten or so hertz (Hz).

With the mixer/distributor 1022 arranged as described above, the DOWN FM signal applied to the primary terminal 1024 is coupled to the primary side of the mixing/distributing circuit 1220 via the DC blocking capacitor 1222 and divided into four in the mixing/distributing circuit 1220. The distributed DOWN FM signals are developed at the secondary side of the mixing/distributing circuit 1220 and coupled to the respective secondary terminals 1026 via the respective DC blocking capacitors 1224. Further, the DC power applied through the primary terminal 1024, being superposed on the DOWN FM signal, is applied to the respective secondary terminals 1026 via the low-pass filter 1226 and the respective low-pass filters 1228.

The UP FM signals coupled to the secondary terminals 1026 are coupled via the respective DC blocking capacitors 1224 to the secondary side of the mixing/distributing circuit 1220, where they are mixed with each other. The mixture of the UP FM signals is outputted from the primary side of the mixing/distributing circuit 1220, and coupled to the primary terminal 1024 via the DC blocking capacitor 1222.

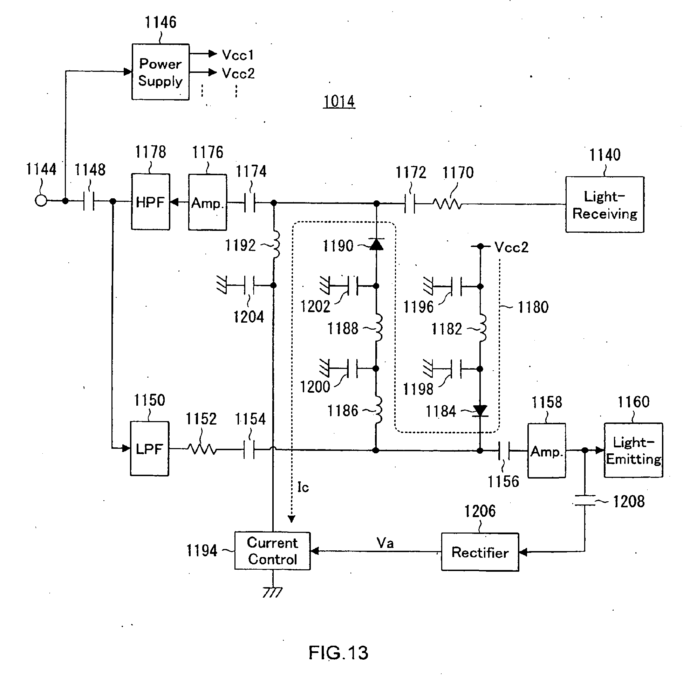

Each of the light emitting/receiving units 1014 has the following structure. As shown in FIGURE 13, the light emitting/receiving unit 1014 has a terminal 1144 to which the coaxial cable 1020 is to be connected so that the above-described DOWN FM signal and the DC power are applied to the light emitting/receiving unit 1014 via the terminal 1144. Also, via this terminal 1144, the UP FM signal is outputted to the coaxial cable 1020.

The DC power supplied via the terminal 1144 is coupled to a power supply circuit 1146, which generates, from the supplied DC power, later-mentioned supply voltages Vcc1, Vcc2, ..., for driving circuits in that light emitting/receiving unit 1014.

The DOWN FM signal inputted via the terminal 1144 is applied through a DC blocking capacitor 1148 to a low-pass filter 1150, which is receiving means. The cutoff frequency of the low-pass filter 1150 is higher than the upper limit frequency of the DOWN FM signal (DOWN channels CH1 and CH2) and lower than the lower limit frequency of the UP FM signal (UP channels CH0-CH4), and is, for example, 2.39 MHz. Accordingly, the DOWN FM signal applied to the low-pass filter 1150 passes through the low-pass filter 1150 and is applied to an amplifier circuit 1158 through a resistor 1152 and two DC blocking capacitors 1154 and 1156. The amplifier circuit 1158 amplifies the input DOWN FM signal by a predetermined amplification factor, and the amplified DOWN FM signal is applied to a light-emitting circuit 1160, which is light-emitting means.

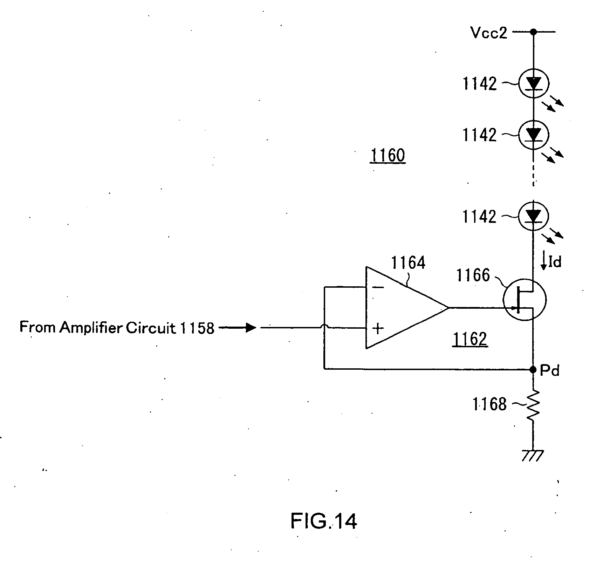

As shown in FIGURE 14, the light-emitting circuit 1160 has a series combination of the above-described infrared-light emitting diodes 1142, which are oriented to different directions to thereby emit infrared light in various directions. A voltage-to-current converting circuit 1162 is provided for supplying current Id, having a magnitude corresponding to the signal level of the above-described DOWN FM signal, to the respective infrared-light emitting diodes 1142 so as to cause the infrared-light emitting diodes 1142 to emit infrared light.

Specifically, the voltage-to-current converting circuit 1162 includes an operational amplifier 1164, an N-channel FET (Field Effect Transistor) 1166 and a resistor 1168. The FM signal after being amplified in the amplifier circuit 1158 is applied to a non-inverting input terminal of the operational amplifier 1164, which has its output terminal coupled to the gate terminal of the FET 1166, and has its inverting input terminal coupled to the source terminal of the FET 1166. The source terminal of the FET 1166 is connected to the ground potential (GND) through the resistor 1168. The cathode end of the series combination of the infrared-light emitting diodes 1142 is coupled to the drain terminal of the FET 1166, and a power supply line supplying the above-described DC voltage Vcc1 is coupled to the anode end of the series combination of the infrared-light emitting diodes 1142.

With this arrangement, the current Id corresponding to the signal level of the FM signal applied to the non-inverting input terminal of the operational amplifier 1164 flows through the infrared-light emitting diodes 1142 in the forward direction, causing the respective infrared-light emitting diodes 1142 to emit light, or, so to speak, to be provided with brightness-modulation. Thus, infrared light according to the DOWN FM signal is emitted from the respective infrared-light emitting diodes 1142.

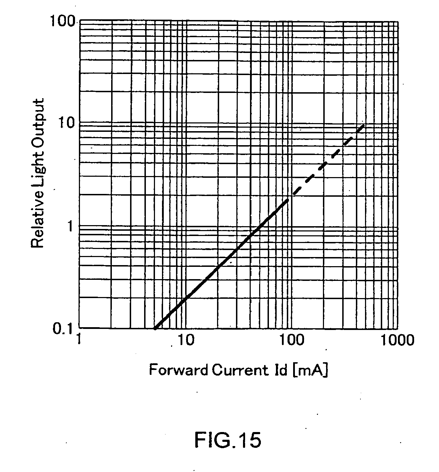

It should be noted that each of the infrared-light emitting diodes 1142 is a non-linear device having a light output not proportional to the forward voltage applied to it, but, as shown in FIGURE 15, it exhibits a linear characteristic to the forward current ld, so that the light output is proportional to the forward current Id. Accordingly, the previously described intermodulation product can be avoided by converting the FM signal to the current Id in the voltage-to-current converting circuit 1162 and causing the infrared-light emitting diodes 1142 to emit light by driving them with the converted current Id, as shown in FIGURE 14.

Turning back to FIGURE 13, each light emitting/receiving unit 1014 also has the above-described light receiving circuit 1140 for receiving infrared light emitted from each of the (nearby) terminal units 1016. The light receiving circuit 1140 includes plural phototransistors (not shown) for receiving infrared light from the terminal units 1016, which are oriented to different directions so that they can receive infrared light from various directions. In order to downsize the light emitting/receiving unit 1014, the phototransistors are disposed relatively near the infrared-light emitting diodes 1142.

Infrared light received by the light receiving circuit 1140 is converted to the UP FM signal, which is inputted to an amplifier circuit 1176 via a resistor 1170, two DC blocking capacitors 1172 and 1174. The amplifier circuit 1176 amplifies the inputted UP FM signal by a predetermined amplification factor, and the amplified UP FM signal is applied to a high-pass filter 1178 as transmitting means. The cutoff frequency of the high-pass filter 1178 is higher than that of the above-described low-pass filter 1150 and lower than the lower limit frequency of the UP FM signal (UP channels CH0-CH4), and is, for example, 6.63 MHz. Thus, the UP FM signal applied to the high-pass filter 1178 passes through the high-pass filter 1178 and is sent to the terminal 1144 via the DC blocking capacitor 1148.

As shown in FIGURE 9, some light emitting/receiving units 1014 are coupled directly to the center unit 1012 (input/output terminal 1018) by their associated coaxial cables 1020, whereas some light emitting/receiving units 1014 are coupled to the center unit 1012 through the mixer/distributors 1022 associated therewith. Furthermore, plural such mixer/distributors are interposed between the center unit 1012 and some light emitting/receiving units 1014. As shown in FIGURE 12, each mixer/distributor 1022 includes the mixing/distributing circuit 1220, which includes impedance components, such as a coil, in order to achieve signal mixing and distribution. Such impedance components like coils are a factor to attenuate the level of a signal to be mixed or distributed, i.e. act as signal attenuating means. Accordingly, depending on whether there is the mixer/distributor 1022 interposed or not and how many mixer/distributors 1022 are interposed, the DOWN FM signal is inputted to the respective light emitting/receiving units at different signal levels (signal reception levels). Similarly, the signal levels of the UP FM signals from the respective light emitting/receiving units 1014 as received at the center unit 1012 differ. According to the third embodiment, in order to remove such signal level difference, each of the light emitting/receiving units 1014 is arranged as described below.

As indicated by an arrowed broken line 1180 in FIGURE 13, a circuit is formed to extend from a power supply line of the predetermined DC voltage Vcc2 through a coil 1182, a PIN diode 1184, a coil 1186, a coil 1188, a PIN diode 1190, a coil 1192, and a current control circuit 1194, in the named order, to a point of reference potential, through which circuit a DC current Ic flows. The cathode of the PIN diode 1184 is connected to the junction of the two DC blocking capacitors 1154 and 1156 in the, so to say, the DOWN signal path, and the cathode of the PIN diode 1190 is connected to the junction of the DC blocking capacitors 1172 and 1174 in the, so to speak, UP signal path.

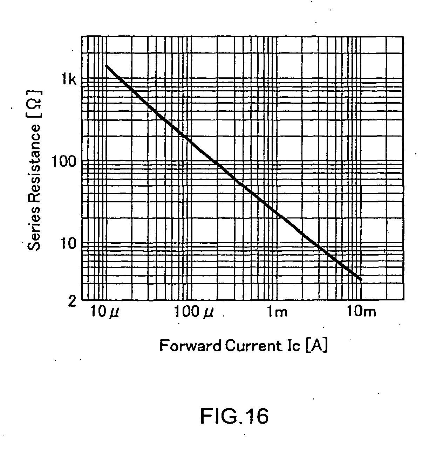

A capacitor 1196 is connected between the junction of the power supply line Vcc2 and the coil 1182 and the ground potential. The capacitor 1196 and the coil 1182 form an AC blocking circuit, which blocks the DOWN FM signal from flowing into the power supply line Vcc2. Further, a capacitor 1198 is connected between the junction of the coil 1182 and the anode terminal of the PIN diode 1184 and the ground potential, so that the anode terminal of the PIN diode 1184 is AC conductively coupled to the ground potential. As shown in FIGURE 16, the PIN diode 1184 exhibits a resistance value in inverse proportion to the forward current Ic flowing therethrough. More specifically, when the forward current. Ic change within a range of from 10 µA to 10 mA, the resistance of the PIN diode 1184 changes generally within a range between 1.5 kΩ and 2.5 Ω. Thus, the DOWN FM signal outputted from the above-described low-pass filter 1150 is voltage-divided by the resistor 1152 and the PIN diode 1184, and the resulting, voltage-divided DOWN FM signal is coupled to the amplifier circuit 1158. In other words, the resistor 1152 and the PIN diode 1184 form an attenuator having a variable attenuation factor. The resistance of the resistor 1152 is 150 Ω, for example.

A capacitor 1200 is connected between the junction of the coils 1186 and 1188 and the ground potential. The capacitor 1200 and the two coils 1186 and 1187 form an AC blocking circuit, which prevents the DOWN FM signal and the UP FM signal from mixing with each other. Another capacitor 1202 is connected between the junction of the coil 1188 and the anode terminal of the PIN diode 1190 and the ground potential, so that the anode terminal of the PIN diode 1190 is AC conductively coupled to the ground potential. The PIN diode 1190 is a diode having the same specification as the PIN diode 1184, or, in other words, exhibits the forward current versus resistance characteristic shown in FIGURE 16. Thus, the UP FM signal outputted from the light receiving circuit 1140 is voltage-divided by the resistor 110 and the PIN diode 1190, and the resulting voltage-divided UP FM signal is inputted to the amplifier circuit 1176. In other words, the resistor 1170 and the PIN diode 1190 form an attenuator circuit having a variable attenuation factor. The resistor 1170 also is a 150Ω resistor like the resistor 1152. ,

A capacitor 1204 is connected between the junction of the coil 1192 and the current control circuit 1194 and the ground potential. The capacitor 1204 and the coil 1192 form an AC blocking circuit, which prevents the UP FM signal from flowing into the current control circuit 1194. The current control circuit 1194 controls the current lc in accordance with the signal level (reception level) of the DOWN FM signal. More specifically, the current control circuit 1194 controls the current Ic in accordance with a DC signal Va provided by a rectifier circuit 1206.

The DOWN FM signal as amplified by the amplifier circuit 1158 is applied to the rectifier circuit 1206 through a DC blocking capacitor 1208. The rectifier circuit 1206 rectifies the DOWN FM signal inputted thereto and coverts it to the above-stated DC signal Va having a voltage value corresponding to the reception level of the DOWN FM signal.

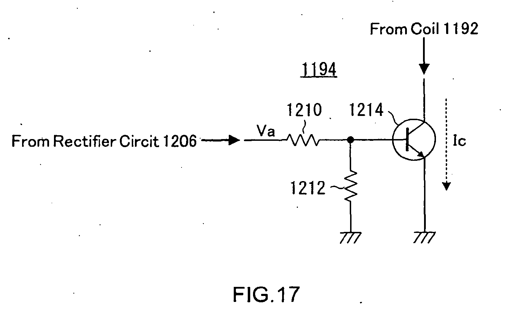

The current control circuit 1194 includes two resistors 1210 and 1212 for voltage-dividing the DC signal Va, as shown in FIGURE 17. The signal as voltage-divided by the resistors 1210 and 1212 is applied to the base terminal of an NPN transistor 1214 having its collector terminal coupled to the coil 1192. The emitter terminal of the transistor 1214 is coupled to the ground potential.

With the above-described arrangement, as the reception level of the DOW FM signal is larger, the current Ic becomes larger. As the current Ic becomes larger, the resistance of the PIN diode 1184 decreases more, resulting in larger attenuation of the DOWN FM signal by the attenuator circuit formed by the PIN diode 1184 and the resistor 1152. On the contrary, as the signal reception level of the DOWN FM signal is smaller, the current lc becomes smaller. The decrease of the current Ic causes the resistance of the PIN diode 1184 to increase, resulting in decrease of the attenuation factor of the attenuator circuit applied to the DOWN FM signal. In this way, the attenuation factor of the attenuator circuit changes with the signal reception level of the DOWN FM signal.

In the center unit 1012, the signal level of the DOWN FM signal is preset to a higher level when it is outputted. In other words, in the stage when the DOWN FM signal is received by the light emitting/receiving unit 1014, the signal reception level of the DOWN FM signal is unnecessarily higher. According to the third embodiment, it is so arranged that the DOWN FM signal preset to a higher signal level is attenuated in the variable attenuator circuit formed by the PIN diode 1184 and the resistor 1152 described above, whereby the infrared-light emitting diodes 1142 can emit light at a constant output level regardless of whether there is any mixer/distributor 1022 interposed and regardless of how many mixer/distributors 1022 are interposed. In other words, automatic control is provided so that the light outputs from the infrared-light emitting diodes 1142 can be constant.

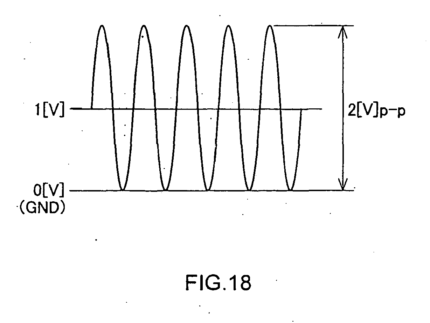

In the light emitting circuit 1160 shown in FIGURE 14, the infrared-light emitting diodes 1142 emit light at peak efficiency when a peak-to-peak value of 2 V with reference to +1 V, as shown in FIGURE 18, appears at, for example, a point Pd at the source terminal of the FET 1166. The signal level of the DOWN FM signal when it is outputted from the center unit 1012 is set such that this condition can be fulfilled, or, in other words, the infrared-light emitting diodes 1142 can emit light always at peak efficiency.

Like the attenuation factor of the attenuator circuit formed of the PIN diode 1184 and the resistor 1152, the attenuation factor of the attenuator circuit formed of the PIN diode 1190 and the resistor 1170 changes with the DOWN FM signal reception level. On the other hand, the signal level of the UP FM signal outputted from the light receiving circuit 1140 is pre-set to a higher level. The UP FM signal pre-set to the higher signal level is attenuated in a variable attenuator circuit formed of the PIN diode 1190 and the resistor 1170, so that the signal level (signal transmission level) of the UP FM signal is adjusted in accordance with the signal reception level of the DOWN FM signal. Accordingly, regardless of whether there is any mixer/distributor 1022 interposed and regardless of how many mixer/distributors 1022 are interposed, the center unit 1012 can receive the UP FM signal always at a constant signal level.

As described above, according to the third embodiment, the center unit 1012 and each light emitting/receiving unit 1014 are connected via a single coaxial cable 1020. Accordingly, in comparison with the prior technique disclosed in the above-cited Non-Patent Literature 1 according to which the coaxial cables 103 dedicated for up-going and the coaxial cables 105 dedicated for down-going are separately provided, the overall arrangement of the infrared conference system 1010 can be simplified, and the system can be provided at a lower cost.

Furthermore, different from the prior technique disclosed in Non-Patent Literature 1, since the respective infrared-light emitting diodes 1142 of the light emitting/receiving units 1014 are brightness modulated with the current Id having its magnitude varying with the signal level of the DOWN FM signal, no intermodulation products are produced. Therefore, reduction in the light-receiving sensitivity of the light emitting/receiving units 1014 due to such intermodulation product does not occur. Accordingly, a higher light receiving sensitivity than that of the prior technique disclosed in Non-Patent Literature 1 can be realized.

Further, the light output of the infrared-light emitting diodes 1142 is controlled to be constant regardless of whether there is a mixer/distributor 1022 interposed and regardless of the number of the interposed mixer/distributors 1022. Also, the signal reception level of the UP FM signal at the center unit 1012 is automatically controlled to be always constant. Thus, stable infrared communications can be realized at any time. The known technique disclosed in Non-Patent Literature 1 contains no conception of using the mixer/distributor 1022. Thus, according to the third embodiment; in comparison with the known technique disclosed in Non-Patent Literature 1, a larger number of light emitting/receiving units 1014 can be used, so that, for example, infrared communication units can be satisfactorily used for a wide conference room, a conference room having a complicated shape, or for a plurality of conference rooms.

The third embodiment has been described with reference to the infrared communication unit 1010 as an example, but the use is not limited to it. A technique similar to the third embodiment can be employed in an infrared communication unit for other purpose than the infrared conference system 1010.

It should be noted that the channel allocation shown in FIGURE 10 is only an example and is not limited to it. Different number of channels, different frequencies and different modulation systems from those shown in FIGURE 10 may be employed.

Also, the circuit configurations shown in FIGURES 11, 12, 13, 14 and 17 are only examples, and the circuit configurations are not limited to them

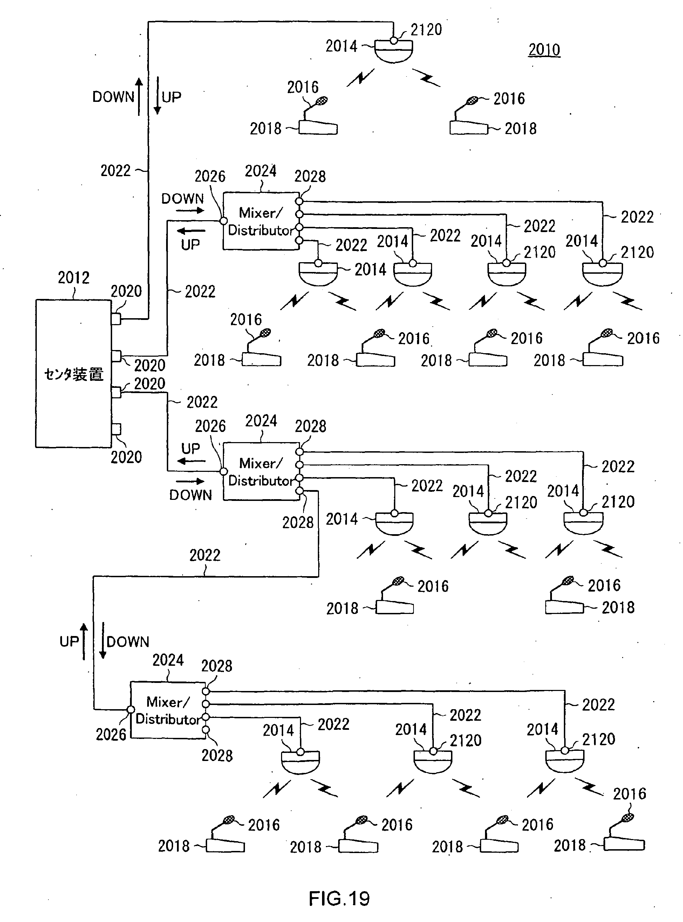

Next, an infrared conference system according to a fourth embodiment of the present invention is described with reference to FIGURES 19-37.

Similar to the third embodiment, an infrared conference system 2010 according to the fourth embodiment, too, includes one center unit 2012, as a main unit, plural light emitting/receiving units 2014 as relay units, and plural terminal units 2018 each having a microphone 2016, as shown in FIGURE 19. The center unit 2012 is disposed at a corner of a conference room, for example, and the light emitting/receiving units 2014 are disposed on the ceiling or a wall of the conference room. The terminal units 2018 are disposed at appropriate locations in the conference room, e.g. on tables for speakers. The terminals units 2018 are assigned with individual identification numbers.

The center unit 2012 has plural, e.g. four, input/output terminals 2020, to each of which one or more of the light emitting/receiving units 2014 can be connected. Specifically, as exemplified by the uppermost input/output terminal 2020 in FIGURE 19, one light emitting/receiving unit 2014 can be connected via one coaxial cable 2022 acting as a transmission line. As the second uppermost input/output terminal 2020 in FIGURE 19, plural, a maximum of four, light emitting/receiving units 2014 can be connected to one input/output terminal 2020 by the use of one mixer/distributor 2024. Further, as exemplified by the third input/output terminal 2020 in FIGURE 19, much more (specifically, five or more) light emitting/receiving units 2014 can be connected to one input/output terminal 2020 by the use of plural (two in FIGURE 19) mixer/distributors 2024. Also, as exemplified by the lower most input/output terminal 2020 in FIGURE 19, there may be an input/output terminal 2020, so to speak, an idle input/output terminal 2020, to which no light emitting/receiving unit 2014 is connected.

Each of the mixer/distributor 2024 has one primary terminal 2026 and four secondary terminals 2028, and operates to distribute a signal inputted through the primary terminal 2026 to the secondary terminals 2028 and mix signals applied thereto through the secondary terminals 2028 for outputting from the primary terminal 2026. For that purpose, the primary terminal 2026 is coupled to one of the input/output terminal 2020 of the center unit 2012 or to one secondary terminal 2028 of another mixer/distributor 2024, through a coaxial cable 2022. Each of the secondary terminals 2028 is connected to a light emitting/receiving unit 2014 or to the primary terminal 2026 of another mixer/distributor 2024 through a coaxial cable 2022, or left idle. Each of the coaxial cables 2022 is supplied with DC power for driving the associated light emitting/receiving unit 2014 from the center unit 2012 acting as the power supply. Each mixer/distributor 2024 has a function to transmit the DC power from the primary terminal 2026 to the respective secondary terminals 2028. The mixer/distributors 2024 are disposed above the ceiling or behind the wall.

Now, the overall operation of the infrared conference system 2010 is briefly described. Let it be assumed, for example, that a request for speech is made through one terminal unit 2018. The speech request is made through a speech request switch on a console (not shown) associated with that terminal unit 2018. This causes UP control data indicating that a speech request has been made is generated in the terminal unit 2018. An identification number representing the requester making the speech request is also incorporated into the UP control data. The UP control data is converted (i.e. frequency modulated) to an UP FM signal at a predetermined reference frequency, which, in turn, is converted (brightness modulated) to infrared light having a wavelength of 870 nm and is emitted from the terminal unit 2018. In order for the infrared light to be emitted, each terminal unit 2018 is provided with later-mentioned plural infrared-light emitting diodes (LEDs) 2030 operating as light emitting means.

The UP infrared light emitted from the terminal unit 2018 impinges onto a light emitting/receiving unit 2014 at an appropriate location, e.g. in the vicinity of that terminal unit 2018. Each light emitting/receiving unit 2014 includes later-mentioned plural photodiodes (PDs) 2040, acting as light receiving means, for converting the incident infrared light to an electrical signal. The light emitting/receiving unit 2014 also provide tuning processing to the electrical signal to thereby derive the UP FM signal. The derived UP FM signal is sent to the center unit 2012 via one coaxial cable 2020 or via one coaxial cable 2020 and one or more mixer/distributors 2024.

Upon receipt of the UP FM signal sent from the light emitting/receiving unit 2014, the center unit 2012 demodulates the received UP FM signal, whereby the UP control data is recovered. Further, the center unit 2012 analyzes the recovered UP control data to determine that a speech request has been made and also recognizes the terminal unit 2018 that has made the speech request. Then, the center unit 2012 prepares DOWN control data indicating that the requested utterance by that terminal unit 2018 is permitted and coverts the DOWN control data to a DOWN FM signal at a reference frequency different from that of the above-described UP FM signal. The DOWN FM signal is sent to every light emitting/receiving unit 2014 through one coaxial cable 2022 or through one coaxial cable 2022 and one or more mixer/distributors 2024.

Each of the light emitting/receiving units 2014 has plural infrared-light emitting diodes 2050, as described later, and causes the associated infrared-light emitting diodes 2050 to emit light in accordance with the DOWN FM signal sent to it from the center unit 2012. In this manner, infrared light having a wavelength of 870 nm is emitted from each of the light emitting/receiving units 2014 (i.e. from the infrared-light emitting diodes 2050).

The DOWN infrared light emitted from the light emitting/receiving units 2014 impinges on the terminal units 2018. Each terminal unit 2018 is provided with later-mentioned plural photodiodes 2060 for converting the incident infrared light to an electrical signal. The converted electrical signal is tuned, whereby the DOWN FM signal is derived. Each terminal unit 2018 demodulates the derived DOWN FM signal to recover the DOWN control data, and makes a judgment as to whether the recovered DOWN control data is addressed to that terminal unit or not. For example, each terminal unit 2018 judges if the identification number of that terminal unit is contained in the DOWN control data. Only the terminal unit 2018 receiving the DOWN control data for that terminal unit is permitted to speak or enabled.

When a speech is made through the enabled terminal unit 2018, i.e. when a sound or voice is inputted into the microphone 2016 of that terminal unit 2018, the UP FM signal is prepared anew in accordance with the inputted sound (sound signal). The frequency of this UP FM signal is designated by the DOWN control data. The prepared UP FM signal is converted to infrared light and emitted from that terminal unit 2018, in the same manner as described above.

The UP infrared light emitted from the terminal unit 2018 impinges on a nearby light emitting/receiving unit 2014, which converts the received infrared light to an electrical signal and tunes the electrical signal, whereby the UP FM signal is derived. The derived UP FM signal is transmitted to the center unit 2012.

The center unit 2012, when receiving the UP FM signal from the light emitting/receiving unit 2014, demodulates the UP FM signal for reproducing the sound signal. The reproduced sound signal is coupled to an external loudspeaker (not shown) connected to an external output terminal (not shown) of the center unit 2012, so that the voice of the speaker is reproduced. The center unit 2012 also produces a DOWN FM signal anew based on the reproduced sound signal. In a manner similar to the one described above, this DOWN FM signal is sent to the respective light emitting/receiving units 2014.

The light emitting/receiving units 2014, upon receipt of the DOWN FM signal sent from the center unit 2012, causes the infrared-light emitting diodes 2050 to emit infrared light. The emitted DOWN infrared light impinges onto the respective terminal units 2018.

Each of the light emitting/receiving units 2014 converts the impinging infrared light to an electrical signal and also tunes the electrical signal, so that the DOWN FM signal is derived. The terminal units 2018 demodulate the derived DOWN FM signal to recover the sound signal. The sound signal is inputted to a monitor speaker (not shown) on the console, whereby the voice of the speaker is reproduced. Thus, the voice uttered by the speaker can be heard at each of the terminal units 2018.

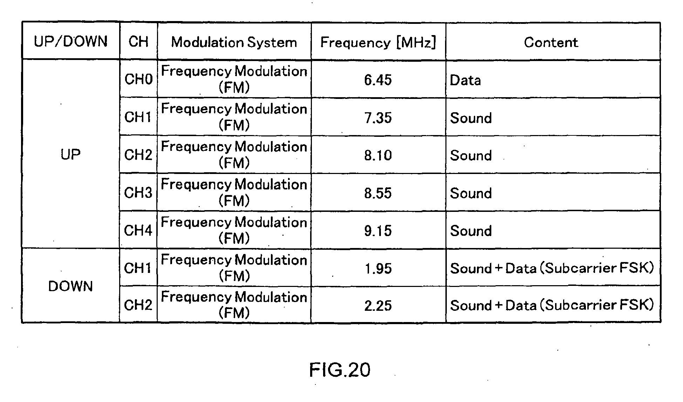

According to the fourth embodiment, speech can be made simultaneously through a maximum of four terminal units 2018. Therefore, there are four channels provided as UP sound channels, extending from the terminal units 2018 through the light emitting/receiving units 2014 to the center unit 2012. More specifically, as shown in FIGURE 20, as the UP sound channels, four channels, namely, CH1, CH2, CH3 and CH4, are provided, whose reference frequencies (i.e. the frequencies of associated carrier waves) are 7.35 MHz, 8.10 MHz, 8.55 MHz and 9.15 MHz. Other than the four UP sound channels CH1, CH2, CH3 and CH4, a control channel CH0 dedicated for the UP control data is provided. The reference frequency of the control channel CH0 is 6.45 MHz.

As DOWN channels, extending from the center unit 2012 through the respective light emitting/receiving units 2014 to the respective terminal units 2018, two channels are provided. More specifically, as shown in FIGURE 20, a channel CH1 whose reference frequency is 1.95 MHz and a channel CH2 whose reference frequency is 2.25 MHz are provided. The channel CH1 is a channel for a main sound, whereas the channel CH2 is a channel for a supplementary sound. Usually, the main sound channel CH1 is predominantly used, and the supplementary sound channel CH2 is used for, for example, providing simultaneous interpretation. The sound of such simultaneous interpretation is applied to the center unit 2012 through an external microphone (not shown) connected to an external input terminal (not shown) of the center unit 2012. On the console of each terminal unit 2018, a channel selection switch (not shown) is provided for selecting a desired one of the main and supplementary sound channels CH1 and CH2, and only the sound of the channel CH1 or CH2 (the sound uttered by the speaker or its simultaneous translation) selected through the channel selection switch is reproduced at the terminal units 2018.

The DOWN channels CH1 and CH2 are also used as control channels for transmitting DOWN control data therethrough. More specifically, the DOWN control data is mixed with the DOWN sound signal and transmitted through the DOWN channel CH1 or CH2. In this case, the DOWN control data is superposed on the sound signal by the use of a subcarrier signal having a frequency of 30 kHz. The modulating system employable for the DOWN control data is, for example, the FSK system. The same control data may be transmitted through the DOWN channels CH1 and CH2, or different pieces of control data may be transmitted.

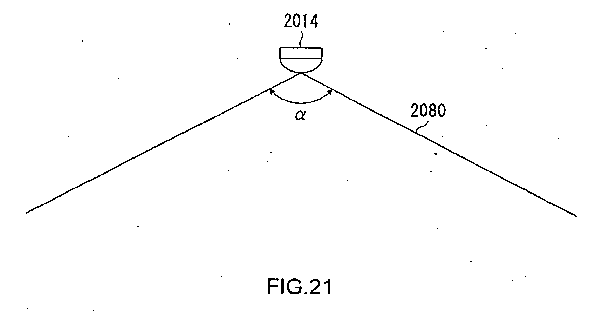

As stated above, each of the light emitting/receiving units 2014 has plural infrared-light emitting diodes 2050 as light emitting means and plural photodiodes 2040 as light receiving means. Specifically, each light emitting/receiving unit 2014 includes sixteen (16) infrared-light emitting diodes 2050 and eight (8) photodiodes 2040 so that a generally conical communication area 2080 with that light emitting/receiving unit 2014 being the apex, as shown in FIGURE 21, can be formed.

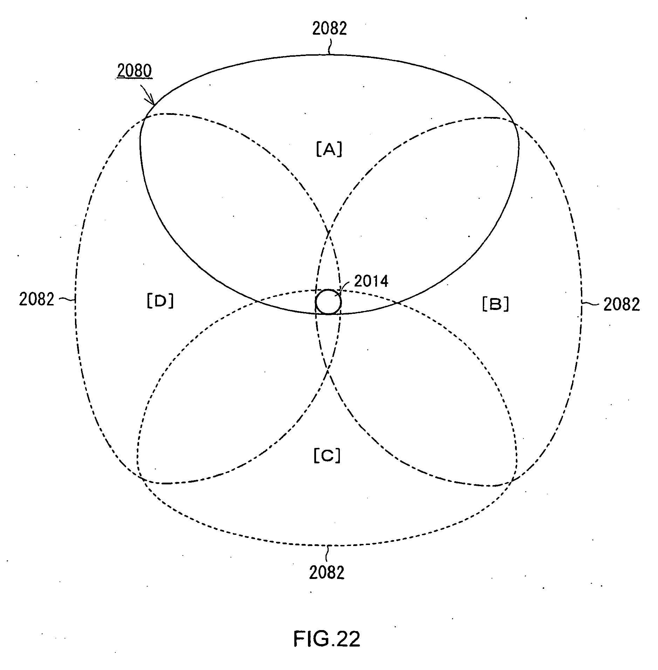

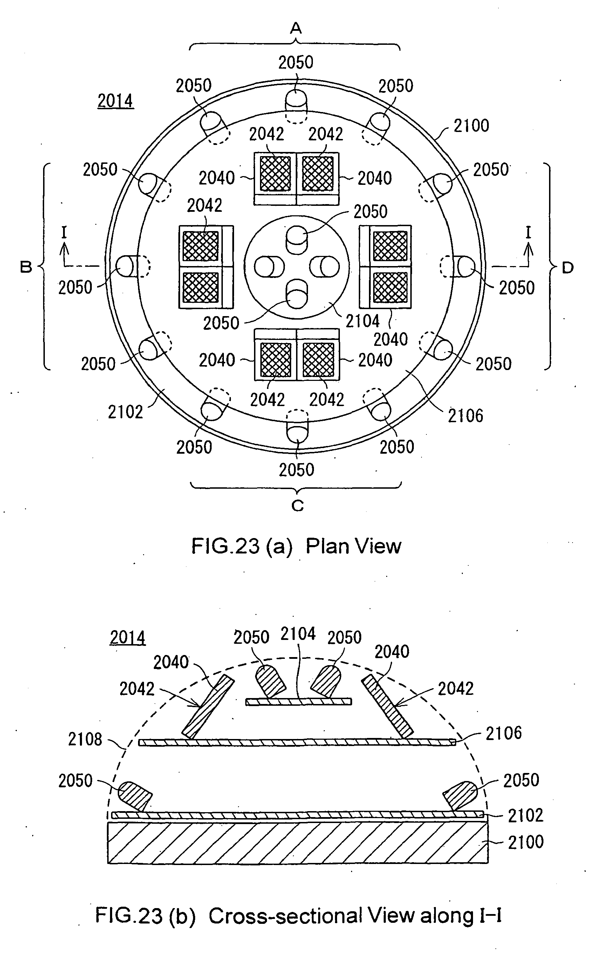

As shown in FIGURE 22 (which is a view of the communication area 2080 seen from above), the communication area 2080 includes four areas 2082 A-D. These areas 2082 are oriented to directions spaced by 90 degrees about the light emitting/receiving unit 2014 and are arranged to overlap so that no gaps between adjacent ones are formed. To form such areas 2028, the infrared-light emitting diodes 2050 are divided into four groups A-D each including four diodes, corresponding to the areas 2082, as shown in FIGURE 23(a). Also, two photodiodes 2040 are allocated to each of the four groups.

More specifically, each light emitting/receiving unit 2014 includes a disc-shaped base 2100, and twelve (12) infrared-light emitting diodes 2050 are radially arranged at equal angular intervals (of 30 degrees) along the periphery of the base 2100. The remaining four (4) infrared-light emitting diodes 2050 are arranged in a portion near the center of the base 2100 equidistantly (at angular intervals of 90 degrees) along the circumferential direction of the base 2100 and oriented away from the base 2100. In other words, for each of the groups A-D, three infrared-light emitting diodes 2050 disposed near the periphery of the base 2100 and one infrared-light emitting diode 2050 disposed near the center of the base 2100 are allocated. As is seen from FIGURE 23(b), the infrared-light emitting diodes 2050 disposed near the periphery of the base 2100 and the infrared-light emitting diodes 2050 disposed near the center of the base 2100 are mounted on separate disc-shaped printed circuit boards 2101 and 2104, respectively. The infrared-light emitting diodes 2050 disposed near the periphery of the base 2100 (on the printed circuit board 2102) are mounted, being tilted by a certain angle, e.g. about 30 degrees, relative to a horizontal plane, and the infrared-light emitting diodes 2050 near the center of the base 2100 (on the printed circuit board 2104) are tilted by a larger angle, e.g. about 60 degrees, relative to a horizontal plane. With this arrangement, the four areas 2082 A-D shown in FIGURE 22 are formed, or, more strictly speaking, light emitting areas as second communication regions.

On the other hand, the photodiodes 2040 are disposed in a space between the infrared-light emitting diodes 2050 near the periphery of the base 2100, on one hand, and the infrared-light emitting diodes 2050 near the center of the base 2100, on the other. Two of the photodiodes 200 are allocated for each of the groups A-D, as described above, and one of the two photodiodes 2040 allocated for each group is for a lower portion of the UP channel CH0-CH4 receiving frequency range (6.45 MHz-9.15 MHz), and the other of the two photodiodes 2040 is for a higher portion of the receiving frequency range. The photodiodes 2040 for each group are disposed side by side, with their light receiving surfaces 2042 facing in the same direction (in the direction outward from the center of the base 2100). The photodiodes 2040 of each group have their light receiving surfaces oriented in a direction spaced by 90 degrees from the light receiving surfaces of the photodiodes 2040 of adjacent groups. As is seen from FIGURE 23, the photodiodes 2040 are mounted on a disc-shaped printed circuit board 2106 separate from the printed circuit boards 2102 and 2104 on which the infrared-light emitting diodes 2050 are mounted. The photodiodes 2040 are tilted by an angle, e.g. about 40 degrees, relative to a horizontal plane. By this arrangement, the four areas 2082 A-D shown in FIGURE 22, more strictly speaking, light receiving areas as first communication regions, are formed.

The apical angle α (see FIGURE 21) of the communication area 2080 formed of the four areas 2082 is about 120 degrees. The printed circuit boards 2102, 2104 and 2106 are disposed, with their center aligned with the center of the base 2100, in a three-story configuration. Specifically, the printed circuit board 2102 on which twelve infrared-light emitting diodes 2050 are mounted is nearest to the base 2100, as, so to speak, a first story. Then, the printed circuit board 2106 on which the photodiodes 2040 are mounted is disposed as a second story, and the printed circuit board 2104 on which four infrared-light emitting diodes 2050 are mounted is disposed as a third story. The printed circuit boards 2102, 2104 and 2106 have different diameters. The diameter of the first-story printed circuit board 2102 is largest, and the diameter of the third-story printed circuit board 2104 is smallest. A dome-shaped cover 2108 of an infrared-light transmissive material formed to cover the printed circuit boards 2102, 2104 and 2106 is fixed to the base 2100.

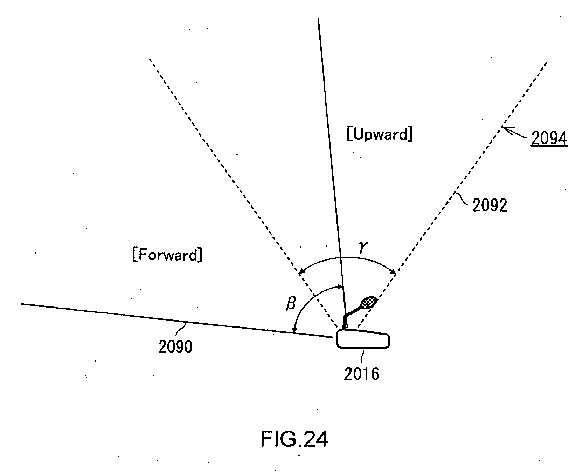

Similarly, as describe previously, each of the terminal units 2018 includes plural infrared-light emitting diodes 2030 as light emitting means, and also plural photodiodes 2060 as light receiving means. Specifically, there are provided twelve (12) infrared-light emitting diodes 1030 and six (6) photodiodes 2060, so that, as shown in FIGURE 24, two communications areas 2090 and 2092 can be formed in front (leftward in FIGURE 24) of and above each terminal unit 2018.

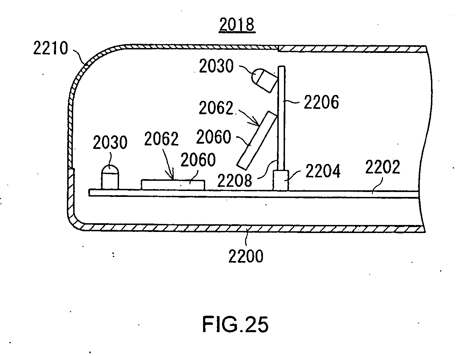

More specifically, each terminal unit 2018, as shown in FIGURE 25, includes a printed circuit board 2202 disposed horizontal within a casing 2200. Six infrared-light emitting diodes 2030 are disposed generally in a line in the lateral direction (i.e. in the direction perpendicular to the plane of the drawing sheet), facing upward. Like these six infrared-light emitting diodes 2030, three photodiodes 2060 are disposed in a line in the lateral direction, with their light receiving surfaces 2062 facing upward. Rearward (rightward in FIGURE 25) of the six infrared-light emitting diodes 2030 and the three photodiodes 2060, another printed circuit board 2206 is coupled to the printed circuit board 2202 by a terminal 2204. The printed circuit board 2206 is perpendicular to the printed circuit board 2202 and has a component mounting surface 2208 facing forward. The remaining six infrared-light emitting diodes 2030 are disposed on the component mounting surface 2208 of the printed circuit board 2206, facing diagonally upward at about 30 degrees, for example, relative to a horizontal plane. The six infrared-light emitting diodes 2030 are disposed generally in a line in the lateral direction. Similarly, the remaining three photodiodes 2060 are disposed on the component mounting surface 2208, being arranged generally in a line in the lateral direction, with their light receiving surfaces 2062 facing diagonally upward at about 30 degrees, for example, relative to a horizontal plane.

The described arrangement can provide a forward communication area 2090 and an upward communication area 2092 as shown in FIGURE 24. In other words, the infrared-light emitting diodes 2030 and photodiodes 2060 mounted on the vertically disposed printed circuit board 2206 provide the forward communication area 2090, while the infrared-light emitting diodes 2030 and photodiodes 2060 mounted on the horizontally disposed printed circuit board 2202 provide the upward communication area 2092. In still other words, the infrared-light emitting diodes 2030 form the light emitting areas 2090 and 2092 as second communication regions, and the photodiodes 2060 provide the light receiving areas 2090 and 2092 as first communication regions. The angle β of the view field in the vertical direction of the forward communication area 2090 is generally on the order of 80 degrees to 90 degrees, and the angle γ of the view field in the front-to-rear direction of the upward communication area 2092 is about 30 degrees to 50 degrees. The communication areas 2090 and 2092 overlap each other, so that a communication area 2094 covering the region extending from forward to upward regions of the terminal unit 2018. That portion of the casing 2200 which covers the infrared-light emitting diodes 2030 and the photodiodes 2060 is formed of an infrared-light transmissive window material 2210.

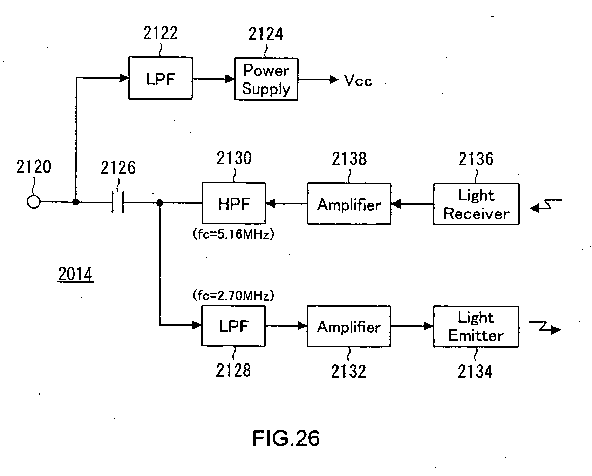

Next, the electrical arrangement of the light emitting/receiving units 2014 is described. As shown in FIGURE 26, each light emitting/receiving unit 2014 has a terminal 2120 to which a coaxial cable 2022 is connected. Through this terminal 2120, a DOWN FM signal and DC power as driving power are inputted from an external device (i.e. the center unit 2012) to the light emitting/receiving unit 2014, and also an UP FM signal is outputted to an external device.

The DC power externally supplied through the terminal 2120 is inputted through an AC blocking low-pass filter 2122 to a power supply circuit 2124. The power supply circuit 2124 generates, from the inputted DC power, plural types (i.e. voltage values) of DC supply voltages Vcc for driving circuits in the light emitting/receiving unit 2014.

The DOWN FM signal is applied through a DC blocking capacitor 2126 to a low-pass filter 2128 and to a high-pass filter 2130. The cutoff frequency of the low-pass filter 2128 is set to a frequency higher than the upper limit frequency of the DOWN channels CH1 and CH2 and lower than the lower limit frequency of the UP channels CHO-CH4, and is, for example, 2.70 MHz. The cutoff frequency of the high-pass filter 2130 is higher than the cutoff frequency of the low-pass filter 2128 and lower than the lower limit frequency of the UP channels CH0-CH4, and is, for example, 5.16 MHz. Accordingly, the DOWN FM signal applied to the low-pass filter 2128 passes through the low-pass filter 2128 and is applied to a RF amplifier circuit 2132. The DOWN FM signal applied to the high-pass filter 2130 cannot pass through the high-pass filter 2130.

The DOWN FM signal applied to the RF amplifier circuit 2132 is amplified in the circuit 2132 and applied to a light emitting circuit 2134. The light emitting circuit 2134 includes the above-described infrared-light emitting diodes 2050 and causes the infrared-light emitting diodes 2050 to emit light, i.e. brightness modulate, in accordance with the DOWN FM signal applied to it from the RF amplifier circuit 2132. In this manner, infrared light having a wavelength of 870 nm is emitted from the infrared-light emitting diodes 2050.

The light emitting/receiving unit 2014 further includes a light receiving circuit 2136. The light receiving circuit 2136 includes the above-described photodiodes 2040, and operates to convert the UP infrared light sent from the terminal unit 2018 to an electrical signal by means of the photodiodes 2040 and tune the electrical signal to derive the UP FM signal. The derived FM signal is amplified in a RF amplifier 2138, before being sent to the terminal 2120 through the high-pass filter 2130 and the capacitor 2126, and the outputted to an external device (the center unit 2012) from the terminal 2120.

The UP FM signal outputted from the high-pass filter 2130 is also coupled to the low-pass filter 2128, but, since the cutoff frequency of the low-pass filter 2128 is lower than the lower limit frequency of the UP channels CH0-CH4, it never occurs that the UP FM signal coupled to the low-pass filter 2128 passes through it to the DOWN RF amplifier circuit 2132. The low-pass filter 2128 and the high-pass filter 2130 are both higher-order (multi-stage) filters, and, by the use of such higher-order filters, the DOW and UP FM signals can be definitely separated, to thereby realize a high C/N (Carrier/Noise) ratio of 200 dB, for example.

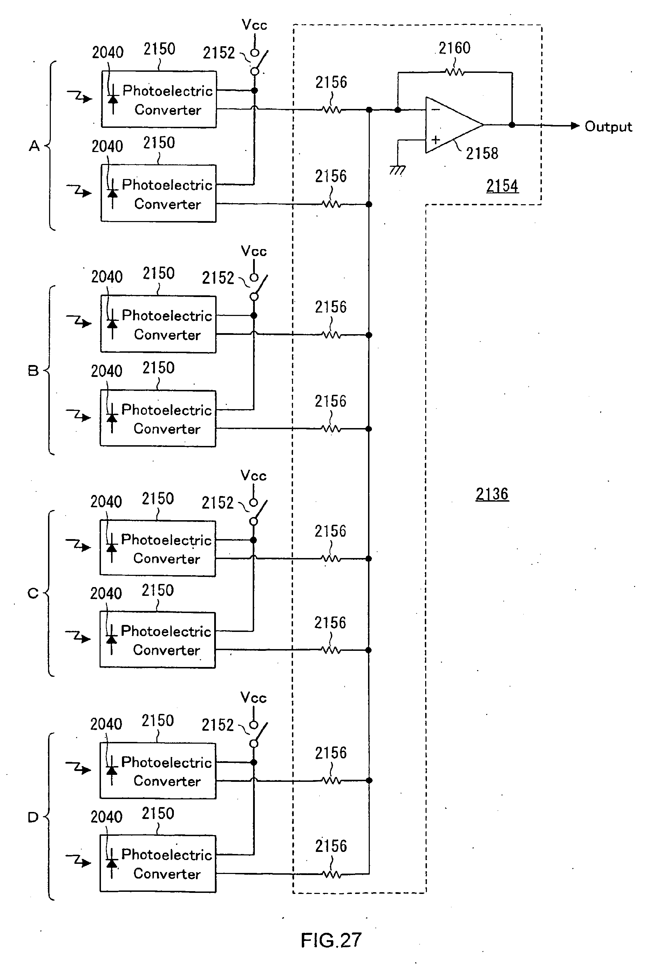

Two of the photodiodes 2040 of the light receiving circuit 2136 are allocated for each of the four groups A-D, as described above. The respective groups of photodiodes 2040 can be electrically activated or deactivated. For that purpose, the light receiving circuit 2136 has a configuration as shown in FIGURE 27.

The light receiving circuit 2136 has one photoelectric converter circuit 2150 for each photodiode 2140, totaling to eight photoelectric converter circuits 2150. The photoelectric converter circuits 2150 are driven from DC supply voltage Vcc supplied thereto through light receiving power supply switches 2152 provided one for each of the groups A-D. Accordingly, only the photoelectric converter circuits 2150 of the group having its light receiving power supply switch 2152 turned on are activated to derive the UP FM signal from the received infrared light. On the other hand, the photoelectric converter circuits 2150 of the group(s) whose light receiving power supply switch(es) 2152 is (are) turned off are deactivated.

The UP FM signals derived in the activated photoelectric converter circuits 2150 are coupled to an adder circuit 2154 acting as combining means, or, more specifically, to an inverting input terminal of an operational amplifier 2158 through input resistors 2156, which form the adder circuit 2154. The inverting input terminal of the operational amplifier 2158 is connected to its output terminal through a feedback resistor 2160. The non-inverting terminal of the operational amplifier 2158 is connected to the ground potential. Accordingly, the adder circuit 2154 develops (at the output terminal of the operational amplifier 2158) a signal resulting from combining the UP FM signals as derived by the activated photoelectric converter circuits 2150. The resultant signal is applied, as an output signal of the light receiving circuit 2136, to the RF amplifier circuit 2138 in FIGURE 26.

The light receiving power supply switches 2152 are manually turned on and off, and may be realized by DIP switches, for example. The light receiving power supply switches 2152 are mounted on the base 2100, for example, and are operated by an installer when the light emitting/receiving units are installed.

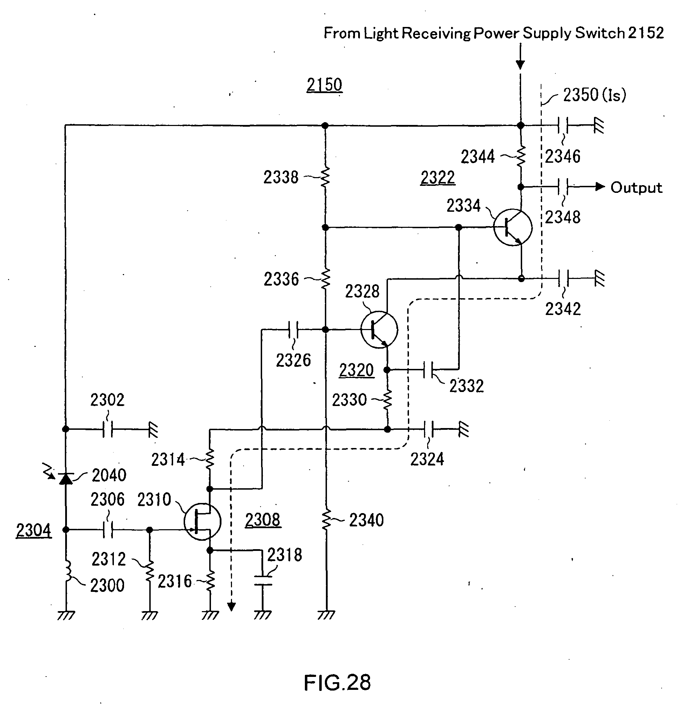

Now, a specific example of configuration of each photoelectric converter circuit 2150 is described in greater detail. As shown in FIGURE 28, the photodiode 2040 of the photoelectric converter circuit 2150 has its cathode terminal connected to the light receiving power supply switch 2152 (Vcc), and has its anode terminal connected to the ground potential via a coil 2300. When the light receiving power supply switch 2152 is turned on, the DC supply voltage Vcc is applied to the photodiode 2040 as a reverse bias voltage. Near the photodiode 2040, a bypass capacitor 2302 connected between the cathode terminal of the photodiode 2040 and the ground potential is disposed.

With the above-described arrangement, when infrared light is incident on the photodiode 2040 with the photodiode 2040 being supplied with the DC supply voltage Vcc (i.e. with the light receiving power supply switch 2152 being ON), the voltage at the anode terminal of the photodiode 2040 varies with the incident intensity of the infrared light. Since the photodiode 2040 has a capacitance component including a junction capacitance, the capacitance component and the inductance of the coil 2300 form a parallel resonant circuit, or a tuned circuit 2304. The tuning frequency (resonant frequency) of the tuned circuit 2304 is determined by the magnitude of the capacitance component and the inductance of the coil 2300. The magnitude of the capacitance component is dependent on the characteristic of the photodiode 2040, and, therefore, the tuned frequency is determined by the inductance of the coil 2300. Specifically, the inductance of the coil 2300 is determined such that one of the two photoelectric converter circuits 2150 in each group can be tuned to the lower side of the receiving frequency range of the UP channels CH0-CH4, and the other photoelectric converter circuit 2150 can be tuned to the higher side.

The UP FM signal derived by the tuned circuit 2304 is coupled through a coupling capacitor 2306 to a preamplifier circuit 2308, or, more specifically, to the gate terminal of an N-channel FET (Field Effect Transistor) 2310 forming the preamplifier circuit 2308. The preamplifier circuit 2308 is formed of the FET 2310, a bias resistor 2312 connected between the gate terminal of the FET 2310 and the ground potential, a power supply resistor 2314 having its one end connected to the drain terminal of the FET 2310, a source grounding resistor 2316 connected between the source terminal of the FET 2310 and the ground potential, and a bypass capacitor 2318 connected in parallel with the resistor 2316. As will be described later, the power for driving the preamplifier circuit 2308 is supplied to it through a succeeding emitter-follower circuit 2320 and a radio frequency amplifier circuit 2322. The other end of the resistor 2314, serving as the power supply port, is connected to the ground potential via a bypass capacitor 2324.

The UP FM signal, after being amplified in the preamplifier circuit 2308 is applied through a DC blocking capacitor 2326 to the emitter-follower circuit.2320, or, more specifically, to the base terminal of an NPN transistor 2328 forming the emitter-follower circuit 2320. The emitter-follower circuit 2320 includes the transistor 2328 and an emitter grounding resistor 2330 having its one end connected to the emitter terminal of the transistor 2328, and receives the UP FM signal from the preamplifier circuit 2308 with high input impedance, or, in other words, impedance-transforms the UP FM signal. After being impedance transformed in the emitter-follower circuit 2320, the UP FM signal is applied to a final-stage radio-frequency amplifier circuit 2322 via a DC blocking capacitor 2332, or, more specifically, to the base terminal of to NPN transistor 2334 forming the radio-frequency amplifier circuit 2322.

When the light receiving power supply switch 2152 is ON, a DC bias voltage is applied to the base terminal of the transistor 2328, which is the input terminal of the emitter-follower circuit 2320. Specifically, the base terminal is connected to the light receiving power supply switch 2152 (Vcc) through resistors 2336 and 2338, and also to the ground potential through a resistor 2340. As described later, the power for driving the emitter-follower circuit 2320 is supplied through the radio-frequency amplifier circuit 2322. For that purpose, the collector terminal of the transistor 2328 is connected to the emitter terminal of the transistor 2334. The collector terminal of the transistor 2328 is also connected to the ground potential through a bypass capacitor 2342.

The radio-frequency amplifier circuit 2322 includes the transistor 2334 and a power supply resistor 2344 connected between the drain terminal of the transistor 2334 and the light receiving power supply switch 2152 (Vcc). The junction of the resistor 2344 and the light receiving power supply switch 2152 is connected to the ground potential through a bypass capacitor 2346. The above-described three resistors 2336, 2338 and 2340 also serve as bias resistors for applying a DC bias voltage to the base terminal of the transistor 2334, with the base terminal connected to the junction of the resistors 2336 and 2338. The UP FM signal which as been amplified in the radio-frequency amplifier circuit 2322 (i.e. the signal developed at the collector terminal of the transistor 2334) is coupled to the adder circuit 2154 shown in FIGURE 27 through a DC blocking capacitor 2348, as the output signal of the photoelectric converter circuit 2150.

With the above-described arrangement of the photoelectric converter circuits 2150, when the light receiving power supply switch 2152 is turned on, DC current Is flows from the DC supply voltage Vcc source through the radio-frequency amplifier circuit 2322, the emitter follower circuit 2320 and the preamplifier circuit 2308 to the ground potential as indicated by an arrowed broken line 2350 shown in FIGURE 28. Thus, the radio-frequency amplifier circuit 2322, the emitter follower circuit 2320 and the preamplifier circuit 2308 are driven with the common DC current ls. By the use of the common power source for the three amplifiers 2308, 2320 and 2322, the overall power consumption of the photoelectric converter circuit 2150 can be reduced. It is desirable for the value of the DC supply voltage Vcc to be relatively high, for example, on the order of from +15 V to + 24V. With this value, the drive current Is can be maintained to be a reduced value of about 1 mA.

Since the FET 2310, which is a high input impedance device, is used in the preamplifier circuit 2308, and the UP FM signal amplified in the preamplifier circuit 2308 is applied to the final stage radio-frequency amplifier circuit 2322 through the impedance-transforming emitter-follower circuit 2320, the amplification factor of the radio-frequency amplifier circuit 2322 can be increased. As a result, the photoelectric converter circuit 2150 as a whole can have a significantly large amplification factor of, for example, about 50 dB.

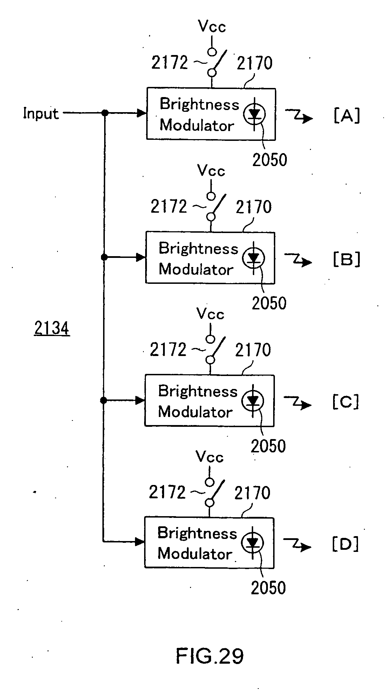

Similarly, the function of the four groups A-D of the infrared-light emitting diodes 2050 can be electrically activated or deactivated individually. For achieving it, the light emitting circuit 2134 is arranged as shown in FIGURE 29.

The light emitting circuit 2134 has four brightness modulation circuits 2170, one for each of the groups A-D. Each of the brightness modulation circuit 2170 includes four pf the infrared-light emitting diodes 2050. Each brightness modulation circuit 2170 is driven from the DC supply voltage Vcc, which is applied to the respective brightness modulation circuits 2170 through light emitting power supply switches 2172, which are provided one for each of the groups A-D. Accordingly, only the brightness modulation circuit 2170 of the group A, B, C or D having its associated light emitting power supply switch 2170 turned on is activated, and causes the associated infrared-light emitting diodes 2050 to emit light in accordance with the DOWN FM signal applied thereto through the RF amplifier circuit 2132. The brightness modulation circuits 2170 of the groups whose light emitting power supply switches 2172 are OFF are deactivated.

Similar to the light receiving power supply switches 2152, the light emitting power supply switches 2172 are provided by, for example, DIP switches. These light emitting power supply switches 2172 are disposed on the above-described base 2100, for example, and are operated by the installer when the light emitting/receiving units 2140 are installed.

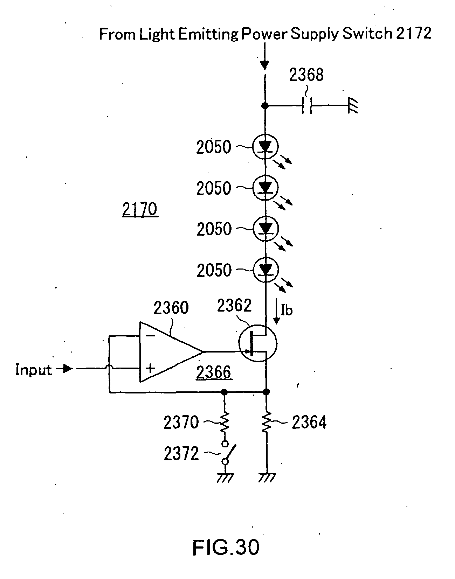

As shown in FIGURE 30, each of the brightness modulation circuits 2170 includes a voltage-to-current converting circuit 2366 formed of an operational amplifier 2360, an N-channel FET 2362 and a resistor 2364.The non-inverting input terminal of the operational amplifier 2360 receives the DOWN FM signal as amplified in the RF amplifier circuit 2132. The operational amplifier 2360 has its output terminal connected to the gate terminal of the FET 2362, and has its inverting input terminal connected to the source terminal of the FET 2362, which, in turn, is connected to the ground potential. The four infrared-light emitting diodes 2050 are connected in series to the drain terminal of the FET 2362. Specifically, the cathode end of the series combination of the four infrared-light emitting diodes 2050 is connected to the drain terminal. The anode end of the series combination of the infrared-light emitting diodes 2050 is connected to the light emitting power supply terminal 2172 (Vcc) and also to the ground potential through a bypass capacitor 2368.

Current Ib according to the signal level of the DOWN FM signal applied to the non-inverting input terminal of the operational amplifier 2360 flows through the infrared-light emitting diodes 2050 in the forward direction. The flow of the current Ib causes the infrared-light emitting diodes 2050 to emit light. In other words, brightness modulation is provided. Thus, infrared light according to the DOWN FM signal is emitted from the infrared-light emitting diodes 2050.

The infrared-light emitting diode 2050 is what is called a nonlinear device, of which light output is not proportional to the forward voltage. Accordingly, if such infrared-light emitting diode 2050 was caused to emit light in accordance with the signal level of the DOWN FM signal, intermodulation product would be produced, impeding the infrared communications. By employing linear devices, as the infrared-light emitting diodes 2050, whose light output is proportional to the forward current Ib, by converting, as described above, the DOWN FM signal to the current Ib in the voltage-to-current converting circuit 2366, and by flowing the current Ib in the forward direction through the infrared-light emitting diodes 2050, generation of such intermodulation product can be prevented, which leads to agreeable infrared communications.

In the arrangement shown in FIGURE 30, a series combination of a resistor 2370 and a switch circuit 2372 is connected in parallel with the resistor 2364. The switch circuit 2372 operates in connection with the light emitting power supply switches 2172 of the other brightness modulation circuits 2170. Specifically, when any of the light emitting power supply switches 2172 of the other brightness modulation circuits 2170 is turned off, the switch circuit 2372 is turned on, resulting in increase of the current Ib flowing through the infrared-light emitting diodes 2050, which, in turn, increases the intensity (energy) of the infrared light emitted by the infrared-light emitting diodes 2050.

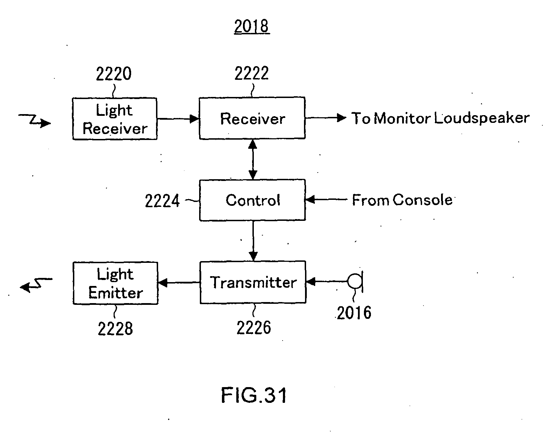

Next, the electrical configuration of each of the terminal units 2018 is described. As shown in FIGURE 31, each terminal unit 2018 includes a light receiving circuit 2220, which, in turn, includes the above-described photodiodes 2060. The light receiving circuit 2220 tunes the electrical signal resulting from the conversion by the photodiodes 2060 to thereby derive the DOWN FM signal. The derived DOWN FM signal is applied to a receiving circuit 2222, where it is translated to an intermediate frequency signal, which is, then, demodulated. This recovers the sound signal or DOWN control data. The sound signal is applied to a monitor loudspeaker (not shown), while the DOWN control data is applied to a control circuit 2224.

The control circuit 2224 includes CPU (Central Processing Unit), and analyzes the DOWN control data supplied thereto from the receiving circuit 2222 and controls the transmitting circuit 2226 to select the UP channel, for example. The above-reference console is also connected to the control circuit 2224, and the control circuit 2224, in response to the operation of the console, controls the transmitting circuit 2226 and the receiving circuit 2223. Specifically, when the above-described channel selection switch, for example, is operated, the receiving channel to be received by the receiving circuit 2222 is controlled, and when the speech request switch is operated, the UP channel of the transmitting circuit 2226 is selected, and prepares and supplies the UP control data representing the selection.

The transmitting circuit 2226 prepares the UP FM signal based on the control data supplied from the control circuit 2224 or the sound signal supplied from the microphone 2016. The prepared UP FM signal is supplied to a light emitting circuit 2228. The light emitting circuit 2228 includes the above-described infrared-light emitting diodes 2030, and causes the infrared-light emitting diodes 2030 to emit light in accordance with the UP FM signal supplied from the transmitting circuit 2226, i.e. performs brightness modulation. Thus, infrared light having a wavelength of 870 nm is emitted from the infrared-light emitting diodes 2030. The circuits forming the terminal unit 2018 are driven from a battery (not shown).

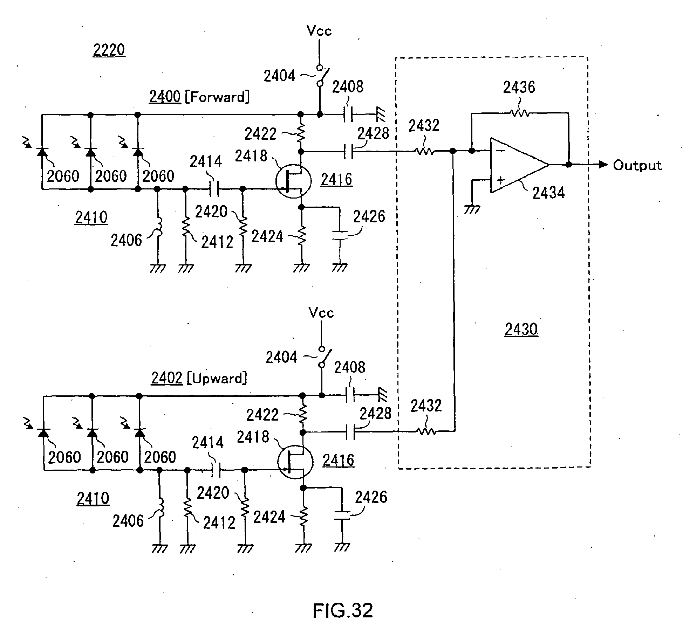

The photodiodes 2060 the light receiving circuit 2220 includes are divided, three for forming the forward communication area 2090 and three for forming the upward communication area 2092. The triplets of photodiodes 2060 for the forward and upward communication areas 2090 and 2092 can be electrically activated or deactivated individually. To realize it, the light receiving circuit 2220 is configured as shown in FIGURE 32.

The light receiving circuit 2220 includes a photoelectric converter circuit 2400 for the forward communication area 2090 and a photoelectric converter circuit 2402 for the upward communication area 2092. The photoelectric converter circuits 2400 and 2402 have electrically the same configuration, and, therefore, only one of them, e.g. the photoelectric converter circuit 2400, is described.

The photoelectric converter circuit 2400 (as well as the photoelectric converter circuit 2402) is driven from the DC supply voltage Vcc supplied by the above-mentioned battery, which is supplied to the photoelectric converter circuit 2400 through a light receiving power supply switch 2404. Therefore, only when the light receiving power supply switch is ON, the photoelectric converter circuit 2400 is activated to derive the DOWN FM signal from the received infrared light. When the light receiving power supply switch 2404 is OFF, the photoelectric converter circuit 2400 is deactivated. As the above-described light receiving power supply switches 2152 of the light emitting/receiving units 2014, the light receiving power supply switch 2404 is also provided by, for example, a DIP switch. It should be noted, however, that the light receiving power supply switch 2404 of each terminal unit 2018 is disposed at a location accessible by the manager of the infrared conference system 2010, for example.

The three photodiodes 2060 forming the photoelectric converter circuit 2400 are connected in parallel, and the cathode terminals of the photodiodes 2060 are connected to the light receiving power supply switch 2404. The anode terminals of the photodiodes 2060 are connected to the ground potential through a coil 2406. Thus, when the light receiving power supply switch 2404 is turned on, the DC supply voltage Vcc is applied to the respective photodiodes 2060 as a reverse bias voltage. A bypass capacitor 2408 is connected between the cathode terminals of the photodiodes 2060 and the ground potential.

When infrared light is incident on the photodiodes 2060 with the DC supply voltage Vcc is applied to the photodiodes 2060 (i.e. with the light receiving power supply switch 2404 being ON), the voltage at the anodes of the photodiodes 2060 changes depending on the incident intensity of the infrared light. Further, as in the case of FIGURE 28, the capacitance components of the photodiodes 2060 and the inductance of the coil 2406 form a tuned circuit 2410. The tuning frequency of the tuned circuit 2410 is set by the inductance of the coil 2406 to the frequency (2.10 MHz) intermediate between the receiving frequencies of the DOWN channels CH1 and CH2 (1.95 MHz and 2.25 MHz). The tuned circuit 2410 is provided with what is called Q-damping processing in order to flatten the sensitivity in the receiving frequency range. Specifically, a resistor 2412 for Q-damping is connected between the anode terminals of the photodiodes and the ground potential.

The DOWN FM signal derived by the tuned circuit 2410 is applied to a preamplifier circuit 2416 similar to the preamplifier circuit 2308 shown in FIGURE 28, through a coupling capacitor 2414. The preamplifier circuit 2416 is formed of an N-channel FET 2418, a bias resistor 2420 connected between the gate terminal of the FET 2418 and the ground potential, a power supply resistor 2422 connected between the drain terminal of the FET 2418 and the above-described light receiving power supply switch 2404, a source grounding resistor 2424 connected between the source terminal of the FET 2418 and the ground potential, and a bias capacitor 2426 connected in parallel with the resistor 2424. The DOWN FM signal amplified in the preamplifier circuit 2416 is applied, as the output signal of the photoelectric converter circuit 2400, to an adder circuit 2430, serving as combining means, through a DC blocking capacitor 2428. More specifically, the amplified DOWN FM signal is applied to the inverting input terminal of an operational amplifier 2434 through an input resistor 2432 forming the adder circuit 2430.

Similarly, when the other photoelectric converter circuit 2402 is activated, its output signal is applied to the adder circuit 2430. Therefore the combined signal of the DOWN FM signal derived by the activated one of the photoelectric converter circuits 2400 and 2402 is outputted from the adder circuit 2430 (i.e. from the output terminal of the operational amplifier 2434). This DOWN FM signal is applied, as the output signal of the light receiving circuit 2220, to the receiving circuit 2222 in FIGURE 31. The adder circuit 2430 has the same configuration as the adder circuit 2154 shown in FIGURE 27. Specifically, the operational amplifier 2434 has its inverting input terminal connected to its output terminal through a feedback resistor 2436, and has its non-inverting input terminal connected to the ground potential.

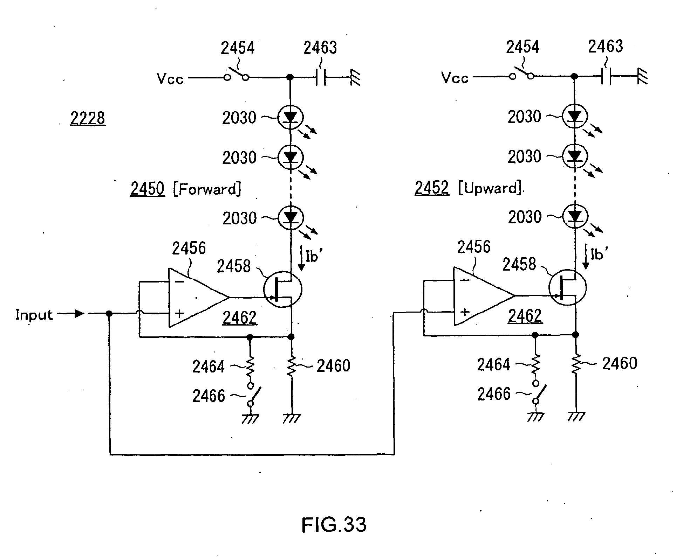

Similarly, the respective groups of the infrared-light emitting diodes2030 of the light emitting circuit 2228 for the communication areas 2090 and 2092 can electrically activated or deactivated individually. To realize it, the light emitting circuit 2228 is configured as shown in FIGURE 33.

The light emitting circuit 2228 includes a brightness modulation circuit 2450 for the forward communication area 2090 and a brightness modulation circuit 2452 for the upward communication area 2092. Since these brightness modulation circuits 2450 and 2452 have the same electric configuration, only one of them, e.g. the brightness modulation circuit 2450, is described.

The brightness modulation circuit 2450 (as well as the brightness modulation circuit 252) is driven from the DC supply voltage Vcc supplied by the battery through a light emitting power supply switch 2454, as in the case of the photoelectric converter circuits 2400 and 2402. Accordingly, only when the light emitting power supply switch 2454 is ON, the brightness modulation circuit 2450 is activated to thereby cause the infrared-light emitting diodes 2030 to emit light in accordance with the UP FM signal supplied from the transmitting circuit 2226. When the light emitting power supply switch 2454 is OFF, the brightness modulation circuit 2450 is deactivated. Like the light receiving power supply switches 2404, the light emitting power supply switch 2454, too, may be provided by a DIP switch the conference manager, for example, can freely operate.

The brightness modulation circuit 2450 has a configuration similar to that of the brightness modulation circuit 2170 of the light emitting/receiving unit 2014 shown in FIGURE 30, and includes a voltage-to-current converter circuit 2462 formed by an operational amplifier 2456, an N-channel FET 2458 and a resistor 2460. The operational amplifier 2456 receives, at its non-inverting input terminal, the UP FM signal from the transmitting circuit 2226. The operational amplifier 2456 has its output terminal connected to the gate terminal of the FET 2458, and has its inverting input terminal connected to the source terminal of the FET 2458, which, in turn, is connected to the ground potential. The six infrared-light emitting diodes 2030 are serially connected to the drain terminal of the FET 2458. Specifically, the cathode end of the series combination of the infrared-light emitting diodes 2030 is connected to the drain terminal. The anode end of the series combination of the infrared-light emitting diodes 2030 is connected to the light emitting power supply switch 2454 (i.e. to Vcc), and also to the ground potential through a bypass capacitor 2463.

With this arrangement, current Ib' corresponding to the signal level of the UP FM signal applied to the non-inverting input terminal of the operational amplifier 2456 flows through the infrared-light emitting diodes 2030 in the forward direction. The flow of the current lb' causes the infrared-light emitting diodes 2030 to emit light, or, so to speak, brightness modulation takes place. In this manner, infrared light in accordance with the UP FM signal is emitted from the respective infrared-light emitting diodes 2030.

In the configuration shown in FIGURE 33, too, a series combination of a resistor 2464 and a switch circuit 2466 is connected in parallel with the resistor 2460. The switch circuit 2466 operates in connection with the operation of the light emitting power supply switch 2454 of the other brightness modulation circuit 2452. Specifically, when the light emitting power supply switch 2454 of the other brightness modulation circuit 2452 is turned off, the switch circuit 2466 is turned on, causing current Ib' flowing through the infrared-light emitting diodes 2030 to increase, so that the intensity of the infrared light emitted from the infrared-light emitting diodes 2030 increases.

The light emitting/receiving unit 2014 according to the fourth embodiment has its communication area 2080 divided into four areas 2082 A-D. The infrared-light receiving function in each of the four areas 2082 can be manually activated or deactivated as desired through operation of the associated light receiving power supply switch 2152 configured as a DIP switch. This arrangement is very useful in the following situation.

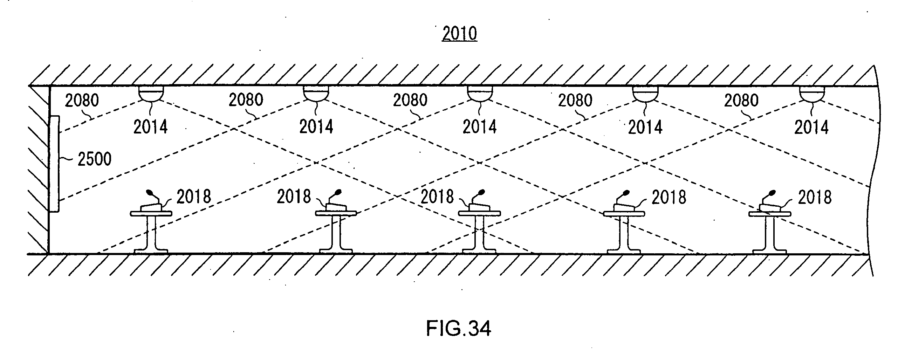

Now, let it be assumed that, as shown in FIGURE 34, the infrared conference system according to the fourth embodiment is used in a conference room where a plasma display device 2500 is present, and also that the light receiving power supply switches 2152 of all of the light emitting/receiving units 2014 are ON. In such case, it may occur that infrared light emitted by the plasma display device 2500 could affect some of the light emitting/receiving units 2014 near the plasma display device 2500 (e.g. the first and second leftmost light emitting/receiving units 2014 in FIGURE 34), impeding normal infrared communications.

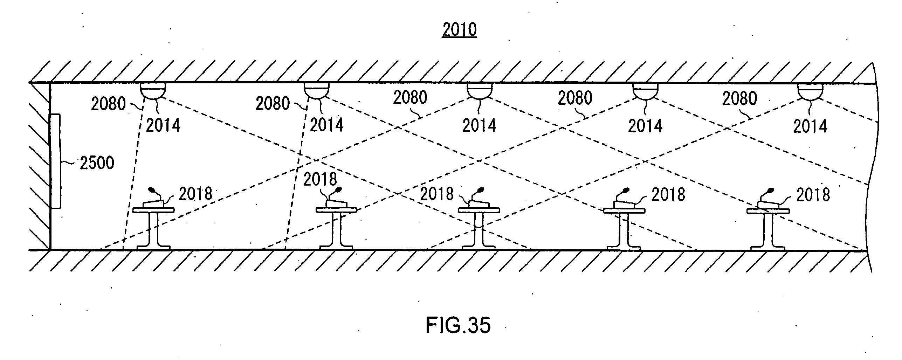

For such light emitting/receiving units 2014, the areas 2082 on the side where the plasma display device 2500 is present are deactivated by operating the light receiving power supply switches 2152, whereby, as shown in FIGURE 35, the plasma display device 2500 can be placed outside the communication areas 2080 of those light emitting/receiving units 2014. By the use of this arrangement, normal infrared communications are possible even in an environment containing the plasma display device 2500, without being affected by infrared light emitted from the plasma display device 2500.

Deactivation of the areas 2082 is performed by stopping the supply of the DC supply voltage Vcc to the photoelectric converter circuits 2150 providing such areas 2082. Accordingly, when any of the areas 2082 (i.e. the photoelectric converter circuits 2150) are deactivated, the power consumption of the light emitting/receiving units 2014 decreases, resulting in reduction of the power consumption of the infrared conference system 2010 as a whole.

When the infrared-light receiving function in any areas 2082 is deactivated, such areas are excluded from the communication region. Accordingly, it is not necessary to emit DOWN infrared light from the light emitting/receiving units 2014 to such areas 2082. Then, it is desirable to operate the light emitting power supply switches 2172 to stop sending of DOWN infrared light to the excluded areas 2082. The stoppage of transmission of DOWN infrared light to any of the areas 2082 can increase the intensity of DOWN infrared light sent to the remaining areas 2082. Therefore, if the infrared light emitted from the plasma display device 2500 is noise, the required infrared light S/N (Signal/Noise) ratio (for the infrared communications) can be improve so that the influence of the noise can be reliably suppressed.

Similarly, the communication area 2094 of each terminal unit 2018 includes the forward communication area 2090 and the upward communication area 2092. The light receiving function of each of the two communication areas 2090 and 2092 can be activated or deactivated, as desired, through manual operation of light receiving power supply switches 2404 having a DIP switch configuration.

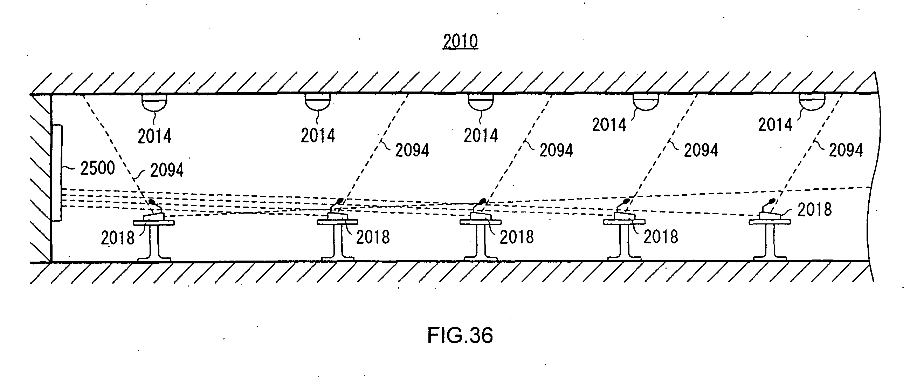

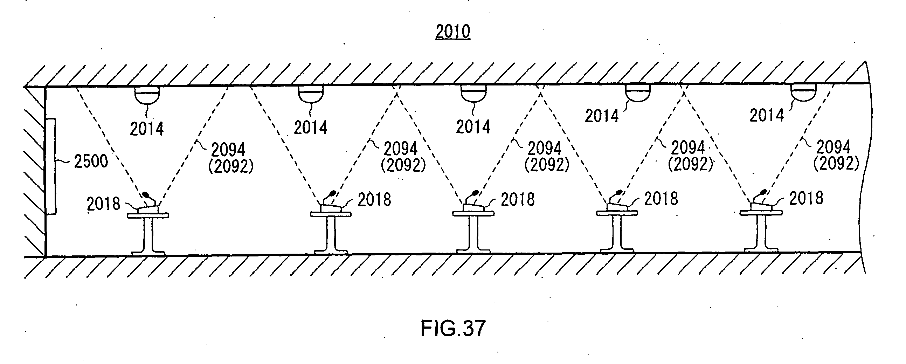

For example, as shown in FIGURE 36, the plasma display device 2500 may be within the communication areas 2094 of some of the terminal units 2018, depending on their locations or orientations. Even in such situation, the influence of the infrared light emitted by the plasma display device 2500 can be eliminated through operation of the light receiving power supply switches 2404. Specifically speaking, as shown in FIGURE 37, by activating only the upward communication areas 2092 of all of the terminal units 2018 and activating the forward communication areas 2090, the influence of the plasma display device 2500 can be eliminated regardless of the locations or orientations of the terminal units 2018. This means that the locations and orientations of the terminal units 2018 can be changes as desired. That is, the terminal units 2018 can be laid out freely without being restricted by the presence of a noise source like the plasma display 2500. Accordingly, when the terminal units 2018 are installed in a different environment (e.g. conference room), such environmental change can be readily well coped with.

The deactivation of the communication areas 2090 and 2092 is performed by stopping the supply of the DC supply voltage Vcc to the photoelectric converter circuits 2400 and 2402 forming the respective communication areas 2090 and 2092. Therefore, the power consumption in the terminal units 2018 can be reduced. This fact is very desirable for the terminal units 2018, which are driven from battery power sources.

Also, in each of the terminal units 2014, the emission of UP infrared light to the respective communication areas 2090 and 2092 can be stopped as desired by manually operating the light emitting power supply switches 2454. When the emission of UP infrared light to one of the communication areas 2090 and 2092 is stopped, the intensity of the infrared light outputted to the other of the communication areas 2090 and 2092 increases, resulting in improvement of the UP infrared light S/N ratio, so that influence of infrared light emitted, as noise, from the plasma display device 2500 is decreased.

As is clear from the above description, according to the fourth embodiment, for the light emitting/receiving units 2014, influence of infrared light from the plasma display device 2500 can be eliminated by a very simple operation of manually operating the light receiving power supply switches 2152. Also, for the terminal units 2018, influence of infrared light from the plasma display device 2500 can be eliminated by manually operating the light receiving power supply switches 2404. Not only influence of infrared light from the plasma display device 2500, influence of various noise sources, such as solar light and discharge-type illuminating devices, can be eliminated in a similar manner.

With respect to the light emitting/receiving units 2014, the areas 2082 to which infrared light is emitted can be deactivated by manual operation of the light emitting power supply switches 2172. When the areas 2082 to which infrared light is to be emitted are limited, the intensity of infrared light for the remaining (active) areas 2082 increases. Also, with respect to the terminal units 2018, the areas 2090 and 2092 to which infrared light is to be emitted can be restricted by manual operation of the light emitting power supply switches 2454. When the light emitting areas 2090 or 2092 are deactivated, the intensity of infrared light emitted to the remaining light emitting areas 2092 or 2090 increases, resulting in agreeable infrared communications hardly affected by noise can be realized.

The fourth embodiment has been described with respect to the infrared conference system 2010 by way of example, but is not limited to it. For example, the technique of the fourth embodiment can be applied to an apparatus operating at a single frequency, or the technique may be applied to apparatus only receiving infrared light, or, so to speak, a light receiving apparatus.

The operation of the light receiving power supply switches 2152 and light emitting power supply switches 2172 of the light emitting/receiving units 2014 may be centrally controlled by means of the center unit 2012. Also, the light receiving power supply switches 2404 and light emitting power supply switches 2454 of the terminal units 2018 may be arranged to be remote-controlled by the center unit 2012.

The light emitting power supply switches 2172 of the light emitting/receiving units 2014 may be turned on and off in conjunction with operation of the light receiving power supply switches 2152. Specifically, it may be arranged that, when any light receiving power supply switch 2152 is turned off to thereby deactivate the associated area 2082, the light emitting power supply switch 2172 relating to the deactivated area 2082 is turned off.

With respect to the terminal units 2018, too, it may be arranged that the light emitting power supply switches 2454 are turned on and off in conjunction with the operation of the light receiving power supply switches 2404. In other words, when any one of the light receiving power supply switches 2404 is turned off so as to deactivate the associated communication area 2090 or 2092, the light emitting power supply switch 2454 relating to the deactivated communication area 2090 or 2093 is turned off.

The described structures and circuit configurations of the light emitting/receiving units 2014 and terminal units 2018 according to the four embodiment are only examples, and the invention is not limited by them.

## Claims

1. An infrared communication unit (1014) for relaying between a main unit (1012) and a terminal unit (1016), plural such infrared communication units (1014) being connectable to said main unit (1012) through separate transmission lines (1020), said infrared communication unit (1014) being adapted to perform bidirectional communications with said terminal unit (1016) by means of infrared light, said infrared communication unit (1014) comprising:
signal receiving means (1150) for receiving a first signal transmitted from said main unit (1012) through said transmission line (1020);
light emitting means (1160) including an infrared-light emitting diode (1142), for driving said infrared-light emitting diode in accordance with a signal level of said first signal received by said signal receiving means (1150), so as to emit DOWN infrared light; and
light receiving means (1140) for receiving UP infrared light prepared by said terminal unit (1016) in accordance with a second signal in a different frequency range from said first signal, and recovering said second signal;
**characterized in that** said infrared communication unit (1014) further comprises adjusting means (1170, 1190) for adjusting a signal level of said second signal recovered by said light receiving means (1140) to be in inverse proportion to the signal level of said first signal having been received by said signal receiving means (1150), and
transmitting means (1178) for sending said second signal adjusted by said adjusting means (1170,1190) into said transmission line (1020).

2. The infrared communication unit according to Claim 1, wherein plural such first signals in different frequency ranges are transmitted through said transmission line (1020), being mixed with each other; and
said adjusting means is an attenuator including a resistor (1170) and a PIN diode (1190), the PIN diode exhibiting a resistance value in inverse proportion to a current having a value corresponding to a signal level of said plural first signal.

3. The infrared communication unit according to Claim 1, wherein plural such first signals in different frequency ranges are transmitted through said transmission line (1020), being mixed with each other;
said infrared-light emitting diode (1142) has such a characteristic that a light output value is approximately proportional to a forward current value; and
said light emitting means (1160) causing said infrared-light emitting diode (1142) to emit light by causing current having a value corresponding to the magnitude of said plural first signals to flow into said infrared-light emitting diode in the forward direction.

4. The infrared communication unit according to Claim 3, wherein said light emitting means (1160) includes converting means (1162) for converting said plural first signals into said current, and current coupling means for causing said current as converted in said converting means to flow into said infrared-light emitting diode (1142).

5. The infrared communication unit according to Claim 3 or 4, wherein said light receiving means (1140) is disposed near said infrared-light emitting diode (1142).

6. The infrared communication unit according to any one of Claims 1-5, wherein said first signal is a frequency modulated signal.

7. The infrared communication unit according to any one of Claims 1-6, wherein said second signal is a frequency modulated signal.

## Patentansprüche

1. Infrarot-Kommunikationseinheit (1014) zur Übertragung zwischen einer Haupteinheit (1012) und einer Terminaleinheit (1016), wobei mehrere solche Infrarot-Kommunikationseinheiten (1014) durch separate Übertragungsleitungen (1020) mit der Haupteinheit (1012) verbindbar sind und die Infrarot-Kommunikationseinheit (1014) in der Lage ist, mittels Infrarotlicht bidirektionale Kommunikationen mit der Terminaleinheit (1016) durchzuführen, wobei die Infrarot-Kommunikationseinheit (1014) aufweist:
eine Signalempfangseinrichtung (1150) zum Empfang eines ersten Signals, das von der Haupteinheit (1012) durch die Übertragungsleitung (1020) übertragen wird;
eine Lichtemissionseinrichtung (1160), die eine Infrarotlicht emittierende Diode (1142) enthält, zur Steuerung der Infrarotlicht emittierenden Diode gemäß einem Signalpegel des von der Signalempfangseinrichtung (1150) empfangenen ersten Signals, um damit Abwärts-Infrarotlicht zu emittieren; und
eine Lichtempfangseinrichtung (1140) zum Empfang von Aufwärts-Infrarotlicht, das von der Terminaleinheit (1016) gemäß einem zweiten Signal in einem sich von dem ersten Signal unterscheidenden Frequenzbereich erzeugt wird, und zum Wiedergewinnen des zweiten Signals;
**dadurch gekennzeichnet, dass** die Infrarot-Kommunikationseinheit (1014) ferner eine Einstelleinrichtung (1170, 1190) aufweist zum Einstellen eines Signalpegels des von der Lichtempfangseinrichtung (1140) wiedergewonnenen zweiten Signals derart, dass er invers proportional zu dem Signalpegel des ersten Signals ist, das von der Signalempfangseinrichtung (1150) empfangen worden ist, und
eine Sendeeinrichtung (1178) zum Senden des von der Einstelleinrichtung (1170, 1190) eingestellten zweiten Signals in die Übertragungsleitung (1020).

2. Infrarot-Kommunikationseinheit nach Anspruch 1, wobei mehrere solche ersten Signale in unterschiedlichen Frequenzbereichen miteinander gemischt durch die Übertragungsleitung (1020) übertragen werden; und
die Einstelleinrichtung ein einen Widerstand (1170) und eine PIN-Diode (1190) enthaltendes Dämpfungsglied ist, wobei die PIN-Diode einen Widerstandswert aufweist, der in umgekehrtem Verhältnis zu einem Strom ist, welcher einen Wert entsprechend einem Signalpegel der mehreren ersten Signale hat.

3. Infrarot-Kommunikationseinheit nach Anspruch 1, wobei mehrere solche ersten Signale in unterschiedlichen Frequenzbereichen miteinander gemischt durch die Übertragungsleitung (1020) übertragen werden;
die Infrarotlicht emittierende Diode (1142) eine derartige Charakteristik hat, dass ein Ausgangslichtwert ungefähr proportional zu einem Vorwärtsstromwert ist; und
die Lichtemissionseinrichtung (1160) die Infrarotlicht emittierende Diode (1142) **dadurch** zur Lichtemission veranlasst, dass Strom mit einem der Größe der mehreren ersten Signale entsprechenden Wert veranlasst wird, in der Vorwärtsrichtung in die Infrarotlicht emittierende Diode zu fließen.

4. Infrarot-Kommunikationseinheit nach Anspruch 3 wobei die Lichtemissionseinrichtung (1160) eine Umwandlungseinrichtung (1162) zum Umwandeln der mehreren ersten Signale in den Strom enthält sowie eine Stromkopplungseinrichtung, um den in der Umwandlungseinrichtung umgewandelten Strom zu veranlassen, in die Infrarotlicht emittierende Diode (1142) zu fließen.

5. Infrarot-Kommunikationseinheit nach Anspruch 3 oder 4, wobei die Lichtempfangseinrichtung (1140) in der Nähe der Infrarotlicht emittierenden Diode (1142) angeordnet ist.

6. Infrarot-Kommunikationseinheit nach einem der Ansprüche 1 bis 5, wobei das erste Signal ein frequenzmoduliertes Signal ist.

7. Infrarot-Kommunikationseinheit nach einem der Ansprüche 1 bis 6, wobei das zweite Signal ein frequenzmoduliertes Signal ist.

## Revendications

1. Unité de communication infrarouge (1014) pour relayer entre une unité principale (1012) et une unité terminale (1016), plusieurs de tels unités de communication infrarouge (1014) pouvant être connectées à ladite unité principale (1012) par des lignes de transmission séparées (1020), ladite unité de communication infrarouge (1014) étant apte à effectuer des communications bidirectionnelles avec ladite unité terminale (1016) par lumière infrarouge, ladite unité de communication infrarouge (1014) comprenant:
un moyen récepteur de signaux (1150) pour recevoir un signal premier transmis de ladite unité principale (1012) par ladite ligne de transmission (1020);
un moyen émetteur de lumière (1160) comprenant une diode à émission de lumière infrarouge (1142), pour commander ladite diode à émission de lumière infrarouge selon le niveau de signal dudit signal premier reçu par ledit moyen récepteurs de signaux (1150) afin d'émettre EN AVAL lumière infrarouge; et
un moyen récepteur de lumière (1140) pour recevoir EN AMONT lumière infrarouge préparée par ladite unité terminale (1016) selon un signal second dans une gamme de fréquence différant du signal premier, et récupérer ledit signal second;
**caractérisée en ce que** ladite unité de communication infrarouge (1014) comprend en outre un moyen de réglage (1170, 1190) servant à régler un niveau de signal dudit signal second récupéré par ledit moyen récepteur de lumière (1140) afin qu'il est en proportion inverse du niveau de signal dudit signal premier qui a été reçu par ledit moyen récepteur de signaux (1150), et
un moyen de transmission (1178) pour transmettre ledit signal second réglé par ledit moyen de réglage (1170, 1190) dans ladite ligne de transmission (1020).

2. Unité de communication selon la revendication 1, dans laquelle plusieurs de tel signaux premiers en des gammes de fréquence différentes sont transmis par ladite ligne de transmission (1020), étant mélangés l'un avec l'autre; et ledit moyen de réglage est un amortisseur comprenant une résistance (1170) et une diode PIN (1190), la diode PIN présentant une valeur de résistance en proportion inverse à un courant ayant une valeur correspondante à un niveau de signal desdits plusieurs signaux premiers.

3. Unité de communication selon la revendication 1, dans laquelle plusieurs de tel signaux premiers en des gammes de fréquence différentes sont transmis par ladite ligne de transmission (1020), étant mélangés l'un avec l'autre;
ladite diode à émission de lumière infrarouge (1142) ayant une telle caractéristique que une valeur d'émission de lumière est environ proportionnelle à la valeur du courant direct; et
ledit moyen émetteur de lumière (1160) incite que ladite diode à émission de lumière infrarouge (1142) émet de lumière en incitant que un courant ayant une valeur correspondante à la grandeur desdits plusieurs signaux premiers parcourt en sens direct dans ladite diode à émission de lumière infrarouge.

4. Unité de communication selon la revendication 3, dans laquelle ledit moyen émetteur de lumière (1160) comprend un moyen de conversion (1162) pour convertir lesdits plusieurs signaux premiers en ledit courant, et un moyen de couplage de courant pour inciter que ledit courant, en tant que converti dans ledit moyen de conversion, parcourt dans ladite diode à émission de lumière infrarouge (1142).

5. Unité de communication selon la revendication 3 ou 4, dans laquelle ledit moyen récepteur de lumière (1140) est disposé près de ladite diode à émission de lumière infrarouge (1142).

6. Unité de communication selon l'une quelconque des revendications 1-5, dans laquelle ledit signal premier est un signal à modulation de fréquence.

7. Unité de communication selon l'une quelconque des revendications 1-6, dans laquelle ledit signal second est un signal à modulation de fréquence.
